(19) Europäisches Patentamt
European Patent Office
Office européen des brevets

(11) **EP 1 914 996 A2**

(12) **EUROPEAN PATENT APPLICATION**

(43) Date of publication:
**23.04.2008 Bulletin 2008/17**

(51) Int Cl.:
*H04N 7/26* (2006.01)     *H04N 7/34* (2006.01)
*H04N 7/50* (2006.01)

(21) Application number: **07118124.2**

(22) Date of filing: **09.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.10.2006 FR 0654367**

(71) Applicant: **Thomson Licensing**
**92100 Boulogne-Billancourt (FR)**

(72) Inventors:
• **Bottreau, Vincent**
**92648 Boulogne Cedex (FR)**

• **Thoreau, Dominique**
**92648 Boulogne Cedex (FR)**
• **Olivier, Yannick**
**92648 Boulogne Cedex (FR)**
• **Francois, Edouard**
**92648 Boulogne Cedex (FR)**
• **Vieron, Jérôme**
**92648 Boulogne Cedex (FR)**
• **Chevance, Christophe**
**92648 Boulogne Cedex (FR)**

(74) Representative: **Le Dantec, Claude**
**Thomson,**
**46, Quai Alphonse Le Gallo**
**92100 Boulogne-Billancourt (FR)**

(54) **Device and method for coding a sequence of images in scalable format and corresponding decoding device and method**

(57) The invention relates to a method for coding an image data macroblock ($MB_{EL}$) of a sequence of images presented in the form of a base layer and at least one enhancement layer. The image data macroblock ($MB_{EL}$) to which corresponds an image data block in the base layer ($B_{BL}$), called a corresponding block, belongs to the enhancement layer. The method comprises the following steps:
- generate (E72, E73, E73'), for the said image data macroblock ($MB_{EL}$), a prediction macroblock ($MB_{pred}$) of image data from image data blocks of the said base layer previously coded (E70) and reconstructed (E71),
- generate (E74) a macroblock of residues $\left( MB_{EL}^{residues} \right)$ from the prediction macroblock ($MB_{pred}$) and from the image data macroblock $MB_{EL}$ of the enhancement layer, and
- code (E75) the said macroblock of residues $\left( MB_{EL}^{residues} \right)$.

According to the invention, the image data blocks of the said base layer are different from the corresponding block ($B_{BL}$).

FIG. 3

**Description**

1. Field of the invention

The invention relates to a device for coding a sequence of images in scalable format. The invention also relates to a device for decoding a scalable bitstream with a view to the reconstruction of a sequence of images. It also relates to a method for coding an image data macroblock with a view to its use for coding a sequence of images in scalable format and a method for decoding a part of a scalable bitstream for the reconstruction of a macroblock of a sequence of images.

2. Background of the invention

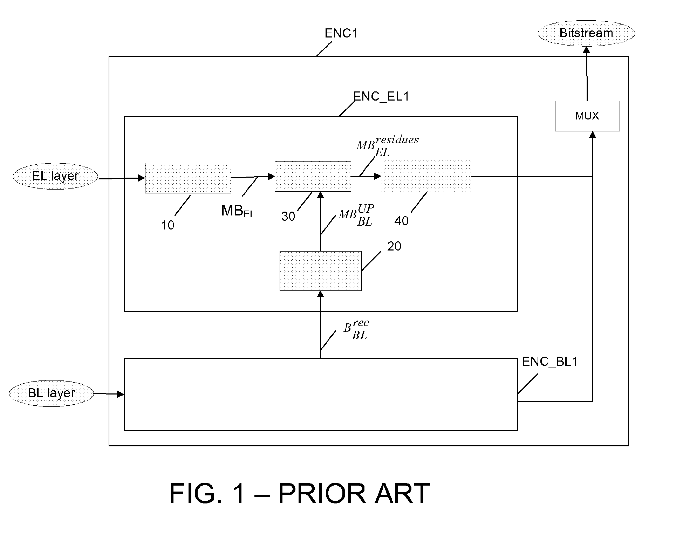

In reference to figure 1, a coding device ENC1 enables a sequence of images presented in the form of a base layer (BL) and at least one enhancement layer (EL) to be coded in scalable format. The images of the BL layer are generally sub-sampled versions of the images of the EL layer. The coding device ENC1 comprises a first coding module ENC_BL1 for coding the BL layer and at least one second coding module ENC_EL1 for coding the EL layer. In general, it also comprises a module MUX connected to the coding modules ENC_BL1 and ENC_EL1 to multiplex the bitstreams generated by the said coding modules ENC_BL1 and ENC_EL1. The multiplex module MUX can be external to the coding device ENC1.

In general, the first coding module ENC_BL1 codes the image data blocks of the BL layer in accordance with a video coding standard known by those skilled in the art of video coders, for example MPEG-2, MPEG-4 AVC, H.261, H.262, H.263, etc.

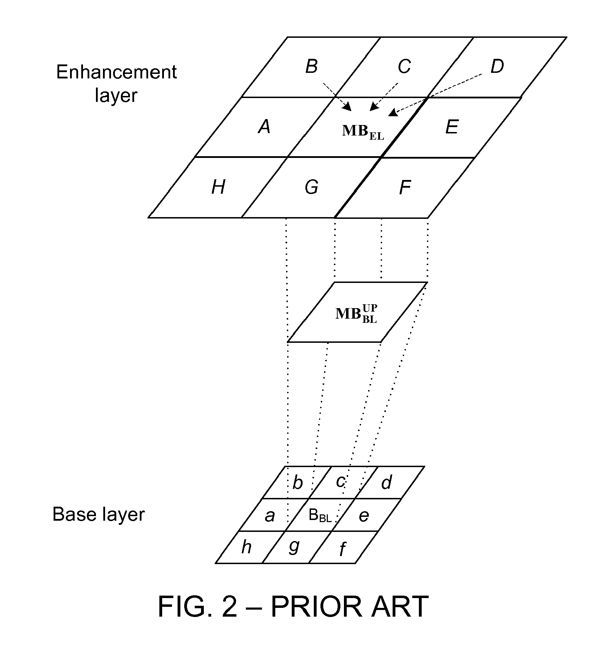

In order to reduce the spatial redundancy between the images of the EL layer, the second coding module ENC_ EL1 is adapted to code image data macroblocks of the EL layer according to standard coding modes, e.g. by temporally or spatially predicting the said image data macroblocks from other image data macroblocks of the EL layer. In reference to figure 2, the second coding module ENC_EL1 can predict and code an image data macroblock of intra type of the EL layer, noted as $MB_{EL}$, from image data macroblocks (e.g. A, B, C and D), spatially neighbours of the said macroblock $MB_{EL}$ and previously coded then reconstructed. For example, the macroblock $MB_{EL}$ is predicted and coded according to a standard intra mode of the same type as those defined by the MPEG-4 AVC standard in the ISO/IEC 14496-10 document entitled "Information technology -- Coding of audio-visual objectsPart 10: Advanced Video Coding". In addition, in order to reduce the redundancy between the images of the BL layer and the images of the EL layer, the second coding module ENC_EL1 is also adapted to code the image data macroblocks of the EL layer from image data of the BL layer according to a coding mode known as "inter-layer". The second coding module ENC_EL1 can also predict and code the image data macroblock $MB_{EL}$ from a corresponding image data block $B_{BL}$ in the base layer (i.e. according to an inter-layer intra mode, written as $intra_{BL}$) previously coded, reconstructed and then up-sampled in a macroblock $MB_{BL}^{UP}$.

Referring again to figure 1, the second coding module ENC_EL1 traditionally includes a decision module 10 adapted to select, according to a predefined selection criterion, a coding mode (e.g. the $intra_{BL}$ mode) for a given macroblock of the EL layer. This selection is carried out, for example, on the basis of a rate-distortion type criterion, i.e. the mode selected is the one that offers the best rate-distortion compromise. Figure 1 only shows the ENC_BL1 and ENC_EL1 modules required to code an image data macroblock of the EL layer in $intra_{BL}$ mode. Other modules not shown in this figure (e.g. motion estimation module) that are well known to those skilled in the art of video coders enable macroblocks of the EL layer to be coded according to standard modes (e.g. intra, inter, etc.) such as those defined in the ISO/IEC 14496-10 document. For this purpose, the second coding module ENC_EL1 includes a module 20 for up-sampling, e.g. by bilinear interpolation, an image data block $B_{BL}^{rec}$ reconstructed by the first coding module ENC_BL1 in order to obtain an up-sampled image data macroblock $MB_{BL}^{UP}$, also called a prediction macroblock. The second coding module ENC_EL1 also includes a module 30 adapted to subtract the prediction macroblock $MB_{BL}^{UP}$ pixel-by-pixel from the image data macroblock of the enhancement layer $MB_{EL}$. The module 30 thus generates a macroblock of residues noted as $MB_{EL}^{residues}$ which is then transformed, quantized and coded by a module 40. The image data are traditionally luminance or chrominance values assigned to each pixel.

In general, the coding device ENC1 does not allow a macroblock $MB_{EL}$ to be coded in $intra_{BL}$ mode when the corresponding block $B_{BL}$ of the BL layer is not coded in intra mode, i.e. when it is coded in inter mode. Such a restriction enables the total reconstruction of the BL layer to be prevented before reconstructing the EL layer and also makes it possible to reduce the complexity of the decoding device decoding the bitstream generated by the coding device ENC1.

Indeed, if the coding device ENC1 codes a macroblock $MB_{EL}$ in $intra_{BL}$ mode whereas the corresponding block $B_{BL}$ is coded in inter mode, the decoding device adapted to reconstruct the macroblock $MB_{EL}$ must first reconstruct the block $B_{BL}$ coded in inter mode. This coding device ENC1 has the disadvantage of having to operate an inverse motion compensation. However, this operation of inverse motion compensation is complex. Moreover, a coding device ENC1 which does not allow a macroblock $MB_{EL}$ to be coded in $intra_{BL}$ mode when the corresponding block $B_{BL}$ is coded in inter mode, has the disadvantage of not using the redundancy between the image data of the EL layer and the image data of the BL layer to a sufficient degree to code the EL layer.

3. Summary of the invention

The purpose of the invention is to overcome at least one disadvantage of the prior art.

The invention relates to a method for coding an image data macroblock of a sequence of images presented in the form of a base layer and at least one enhancement layer. The image data macroblock to which corresponds an image data block in the base layer, called a corresponding block, belongs to the enhancement layer. The method comprises the following steps:

- generate, for the image data macroblock, a prediction macroblock of image data from one block or several blocks of image data previously coded and reconstructed base layer,
- generate a macroblock of residues from the prediction macroblock and from the image data macroblock $MB_{EL}$ of the enhancement layer, and
- code the macroblock of residues.

Preferentially, the prediction macroblock is generated only from blocks of image data of the base layer that are different from the corresponding block.

According to one particular characteristic, the image data blocks of the base layer used to generate the prediction macroblock are adjacent to the corresponding block.

According to another particular characteristic, the image data blocks of the base layer used to generate the prediction macroblock are located in the non-causal neighbouring area of the corresponding block.

According to another particular characteristic, the prediction macroblock is generated from one block or several blocks of image data of the base layer belonging to the set comprising :

- the block lying below and to the left of the corresponding block ($B_{BL}$);
- the block lying below and to the right of the corresponding block ($B_{BL}$);
- the block lying immediately to the right of the corresponding block ($B_{BL}$); and
- the block lying immediately below the corresponding block ($B_{BL}$).

The invention also relates to a device for coding a sequence of images presented in the form of a base layer and at least one enhancement layer. The enhancement layer includes at least one image data macroblock to which corresponds a block in the base layer, called corresponding block. The device comprises a first coding module for coding image data blocks of the base layer and a second coding module for coding image data macroblocks of the enhancement layer. The second coding module comprises:

- first means to generate, for the image data macroblock of the enhancement layer, a prediction macroblock from one block or from several blocks of image data of the base layer previously coded and reconstructed by the first coding module,
- second means to generate a macroblock of residues from the prediction macroblock and from the image data macroblock of the enhancement layer, and
- third means to code the macroblock of residues.

Advantageously, the first means are adapted to generate the prediction macroblock only from blocks of image data of the base layer that are different from the corresponding block.

The invention also relates to a method for decoding a part of a bitstream representative of a sequence of images presented in the form of a base layer and at least one enhancement layer with a view to the reconstruction of an image data macroblock of the enhancement layer to which corresponds an image data block in the base layer, called corresponding block. The method comprises the following steps:

- generate, for the image data macroblock, a prediction macroblock from one block or from several blocks of image data of the base layer previously reconstructed from a first part of the bitstream representative of the image data blocks,

- reconstruct a macroblock of residues from a second part of the bitstream representative of the macroblock of residues, and
- reconstruct the macroblock of the enhancement layer from the prediction macroblock and from the reconstructed macroblock of residues.

Preferentially, the prediction macroblock is generated only from blocks of image data of the base layer that are different from the corresponding block.

The invention also relates to a device for decoding a bitstream representative of a sequence of images presented in the form of a base layer and at least one enhancement layer. The device comprises a first decoding module adapted for reconstructing image data blocks of the base layer and a second decoding module adapted for reconstructing image data macroblocks of the enhancement layer. The second decoding module comprises:

- first means to generate, for an image data macroblock of the enhancement layer to which corresponds an image data block in the base layer, called corresponding block, a prediction macroblock from one block or from several blocks of image data of the base layer previously reconstructed by the first decoding module from a first part of the bitstream representative of the image data blocks,
- second means to reconstruct a macroblock of residues from a second part of the bitstream representative of the macroblock of residues, and
- third means to reconstruct the image data macroblock from the prediction macroblock and from the reconstructed macroblock of residues.

Advantageously, the first means are adapted to generate the prediction macroblock only from blocks of image data of the base layer different from the corresponding block.

The invention also relates to a coded data stream coded representative of a sequence of images presented in the form of a base layer and at least one enhancement layer. The coded data stream comprises a binary data associated with an image data macroblock of the enhancement layer to which corresponds an image data block of the base layer. According to one particular characteristic, the binary data indicates that the macroblock is only coded from blocks of image data of the base layer different from the corresponding block.

The coded data stream is for example in accordance with an MPEG type syntax.

4. Brief description of the drawings

The invention will be better understood and illustrated by means of advantageous embodiments and implementations, by no means limiting, with reference to the figures attached in the appendix, wherein:

- figure 1 shows according to the prior art a device for coding a sequence of images in scalable format,
- figure 2 shows a macroblock $MB_{EL}$ of the enhancement layer and macroblocks A, B, C and D, spatially neighbours as well as a block $B_{BL}$ corresponding to the macroblock $MB_{EL}$ of the base layer and spatially neighbouring blocks a, b, c, d, e, f, g and h,
- figure 3 shows a method for coding a macroblock according to the invention,
- figure 4 shows a macroblock $MB_{EL}$ of the enhancement layer and macroblocks A, B, C and D, spatially neighbours as well as a block $B_{BL}$ corresponding to the macroblock $MB_{EL}$ of the base layer and spatially neighbouring blocks a, b, c, d, e, f, g and h as well as their up-sampled versions,
- figure 5 shows the position of a contour C1 in the enhancement layer and of a contour C2 in the base layer,
- figure 6 shows a second embodiment of a method for coding a macroblock according to the invention,
- figure 7 shows a method for decoding a macroblock according to the invention,
- figure 8 shows a second embodiment of a method for decoding a macroblock according to the invention,
- figure 9 shows a device for coding a sequence of images in scalable format according to the invention,
- figure 10 shows a device for decoding a sequence of images coded in scalable format according to the invention,
- figure 11 shows a macroblock $MB_{EL}$ of the enhancement layer, a block $B_{BL}$ corresponding to the macroblock $MB_{EL}$ of the base layer and spatially neighbouring blocks a, b, c, d, e, f, g and h as well as their up-sampled versions, and
- figure 12 shows a block or macroblock of pixels and two associated axes.

5. Detailed description of preferred embodiments

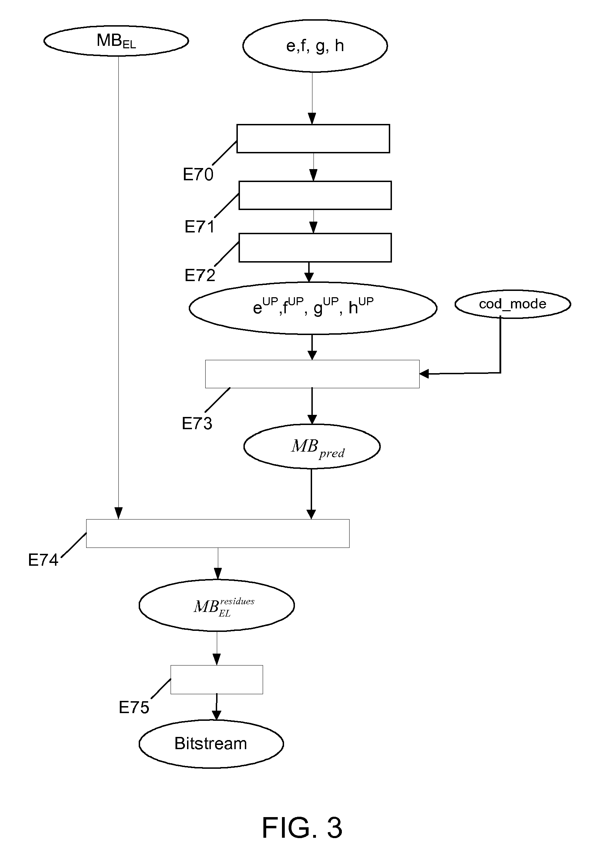

In the description the terms used correspond to those defined in the following standards: MPEG-4 AVC (ISO/IEC 14496-10) and SVC (ISO/IEC MPEG & ITU-T VCEG JVT-R202 entitled "Draft of the Joint Draft 7"). Likewise, the mathematical operators used are those defined in the ISO/IEC 14496-10 document. The operator '>>' indicates a shift to the right. In figures 3 and 6 to 10, the modules shown are functional units that may or may not correspond to physically distinguishable units. For example, these modules or some of them can be grouped together in a single component, or constitute functions of the same software. On the contrary, some modules may be composed of separate physical entities. These figures only show the essential components of the invention.

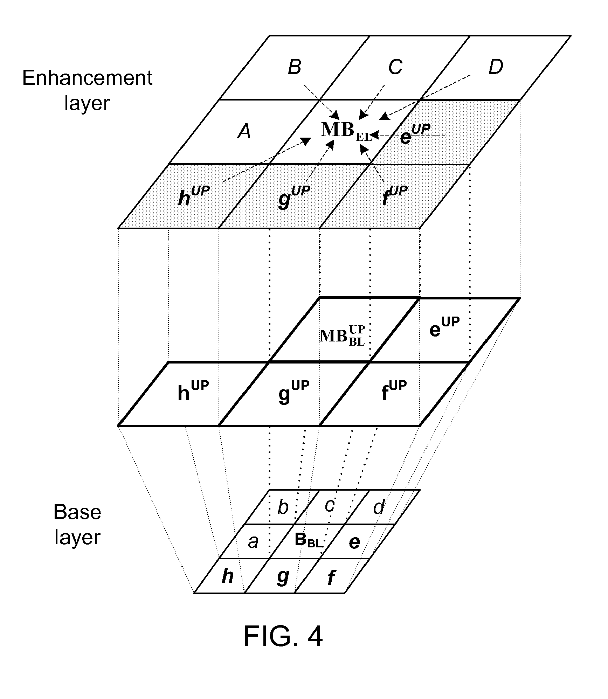

In reference to figure 3, the invention relates to a method for coding an image data macroblock $MB_{EL}$ with a view to its use by a method for coding a sequence of images presented in the form of a base layer and at least one enhancement layer. The image data macroblock $MB_{EL}$ is a macroblock of the EL layer. The coding method according to the invention is adapted to code the macroblock $MB_{EL}$ according to standard coding modes such as those defined in the MPEG4 AVC coding standard. It is also adapted to code the macroblock $MB_{EL}$ in inter-layer mode from the corresponding block $B_{BL}$ of the BL layer (i.e. in $intra_{BL}$ mode) if the block $B_{BL}$ is coded in intra mode; the $intra_{BL}$ mode is not allowed if the corresponding block $B_{BL}$ is coded in inter mode. According to the invention and in reference to figure 4, it is also adapted to code the macroblock $MB_{EL}$ in inter-layer mode from image data blocks (e.g. e, f, g, and h) of the BL layer neighbouring the block $B_{BL}$, i.e. differentfrom the corresponding block $B_{BL}$. In figure 4, blocks e, f, g and h are adjacent to the block $B_{BL}$ and are located in the non-causal neighbouring area of the block $B_{BL}$, i.e. the block $B_{BL}$ is coded before the blocks h, g, f and e are coded, whereas the blocks a, b, c, and d, adjacent to the block $B_{BL}$, are located in the causal neighbouring area of the block $B_{BL}$, i.e. they are coded before the block $B_{BL}$ is coded. The word "adjacent" implies that the neighbouring blocks share a side or corner with the block $B_{BL}$.

According to a first embodiment, the following 4 modes are defined: $intra_{BL\_DC}$, $intra_{BL\_Vert}$, $intra_{BL\_Hor}$, $intra_{BL\_Plane}$. These new inter-layer intra modes enable the macroblock $MB_{EL}$ to be coded from image data blocks e, f, and/or g of the base layer previously coded at step E70, reconstructed at step E71, then up-sampled at stage E72, the up-sampled blocks being noted as $e^{UP}$, $f^{UP}$ and $g^{UP}$ respectively. These 4 modes are defined for luminance image data; they may be extended directly in the case of the chrominance blocks. Note $MB_{pred}$ for the prediction macroblock used to predict the macroblock $MB_{EL}$ and $MB_{pred}[x, y]$ for the luminance value associated with the pixel of coordinates (x,y) in the macroblock, x indicating the horizontal position of the pixel in the macroblock and y the vertical position. Likewise, note $e^{UP}[x,y]$ for the luminance value associated with the pixel of coordinates (x,y) in the macroblock $e^{up}$, $g^{UP}[x,y]$ for the luminance value associated with the pixel of coordinates (x,y) in the macroblock $g^{UP}$ and $f^{UP}[x,y]$ for the luminance value associated with the pixel of coordinates (x,y) in the macroblock $f^{UP}$. The pixel in the top left of a pixel block has the coordinates (0, 0) and the pixel in the bottom right has the coordinates (N-1, N-1), where N is the size of the block, a pixel of coordinates (x,y) being situated in the column x and line y of the block. Note cod_mode for the coding mode previously defined on the basis of a predetermined criterion of the rate-distortion type, for example. The macroblock $MB_{EL}$ is predicted using the macroblock $MB_{pred}$ which is constructed at step E73 from macroblocks $e^{UP}$, $f^{UP}$ and/or $g^{UP}$ according to the coding mode cod_mode selected. During step E74, the prediction macroblock $MB_{pred}$ is subtracted pixel-by-pixel from the image data macroblock of the enhancement layer $MB_{EL}$. This step E74 generates a macroblock of residues noted as $MB_{EL}^{residues}$ which is then transformed, quantized and coded during step E75. Step E75 generates a bitstream, i.e. a series of bits.

According to the invention, if the macroblock $MB_{EL}$ is coded in $intra_{BL\_DC}$ mode, i.e. if cod_mode= $intra_{BL\_DC}$, the macroblock $MB_{pred}$ is constructed as follows:

- if the pixels of the blocks $e^{UP}$ and $g^{up}$ used to construct $MB_{pred}$ are available, i.e. if the pixels used are not outside the image, then:

$$MB_{pred}[x, y]= 1/32*\left(\sum_{X=0}^{15} g^{up}[X,0]+\sum_{Y=0}^{15} e^{up}[0,Y]\right),$$

where x, y = 0..15

- otherwise, if the pixels of the block $g^{up}$ used to construct $MB_{pred}$ are not available, then:

$$MB_{pred}[x, y]= 1/16*\left(\sum_{Y=0}^{15} e^{up}[0,Y]\right),$$

where x, y = 0..15

- otherwise, if the pixels of the block $e^{UP}$ used to construct $MB_{pred}$ are not available, then:

$$MB_{pred}[x, y]= 1/16*\left(\sum_{X=0}^{15}\mathbf{g^{up}}[X,0]\right),$$

where x, y = 0..15

- otherwise

$$MB_{pred}[x, y]= 128,$$

where x, y = 0..15

If the macroblock $MB_{EL}$ is coded in intra$_{BL\_Vert}$ mode, i.e. if cod_mode= intra$_{BL\_Vert}$, then the macroblock $MB_{pred}$ is constructed as follows:

- if the pixels of the block $g^{UP}$ used to construct $MB_{pred}$ are available, i.e. if the pixels used are not outside the image, then:

$$MB_{pred}[x,y]=g^{UP}[x,0] ,$$

where x, y = 0..15

- otherwise this mode is not allowed.

If the macroblock $MB_{EL}$ is coded in intra$_{BL\_Hort}$ mode, i.e. if cod_mode= intra$_{BL\_Hort}$, then the macroblock $MB_{pred}$ is constructed as follows:

- if the pixels of the block $e^{up}$ used to construct $MB_{pred}$ are available, i.e. if the pixels used are not outside the image, then:

$$MBpred[x, y]=e^{UP}[0,y],$$

where x, y = 0..15

- otherwise this mode is not allowed.

If the macroblock $MB_{EL}$ is coded in intra$_{BL\_Plane}$ mode, i.e. if cod_mode= intra$_{BL\_Plane}$, then the macroblock $MB_{pred}$ is constructed as follows:

- if the pixels of the blocks $e^{UP}$ $f^{UP}$ and $g^{UP}$ used to construct $MB_{pred}$ are available, i.e. if the pixels used are not outside the image, we set $g^{UP}[16,0]= f^{UP}[0,0]$ and $e^{UP}[0,16]= f^{UP}[0,0]$,so that:

$$MB_{pred}[x, y]= (a+b*(x-7)+c*(y-7)),$$

where x, y = 0..15
where: - $a=16*(e^{UP}[0,0]+ g^{UP}[0,0])$, $b= (5*H+32)/64$, $c= (5*V+32)/64$

$$- H= \sum_{x=1}^{8} x \left( \mathbf{g}^{\mathbf{UP}} [8-x,0] - \mathbf{g}^{\mathbf{UP}} [x+8,0] \right),$$

$$- V= \sum_{y=1}^{8} y \left( \mathbf{e}^{\mathbf{UP}} [0,8-y] - \mathbf{e}^{\mathbf{UP}} [0,8+y] \right).$$

- otherwise this mode is not allowed.

According to a second embodiment, the 4 modes intra$_{BL\_DC}$, intra$_{BL\_Vert}$, intra$_{BL\_Hor}$, intra$_{BL\_Plane}$ are defined such in such a way that it is not necessary to completely reconstruct the images of the BL layer to reconstruct the images of the EL layer. These inter-layer intra modes enable the macroblock MB$_{EL}$ to be coded from image data blocks e, f, and/or g of the base layer previously coded at step E70, reconstructed at step E71, then up-sampled at stage E72, the up-sampled blocks having been noted as e$^{UP}$, f$^{UP}$ and g$^{UP}$ respectively. These 4 modes are defined for luminance image data; they may be extended directly for the chrominance blocks. Note MB$_{pred}$ for the prediction macroblock used to predict the macroblock MB$_{EL}$ and MB$_{pred}$[x, y] for the luminance value associated with the pixel of coordinates (x,y) in the macroblock, x indicating the horizontal position of the pixel in the macroblock and y the vertical position. Likewise, note e$^{up}$[x,y] for the luminance value associated with the pixel of coordinates (x,y) in the macroblock e$^{up}$, g$^{UP}$[x,y] for the luminance value associated with the pixel of coordinates (x,y) in the macroblock g$^{up}$ and f$^{up}$[x,y] for the luminance value associated with the pixel of coordinates (x,y) in the macroblock f$^{UP}$. The pixel in the top left of a pixel block or macroblock has the coordinates (0, 0) and the pixel in the bottom right has the coordinates (N-1, N-1), where N is the size of the block, a pixel of coordinates (x,y) being situated in the column x and line y of the block. Note cod_mode for the coding mode previously defined on the basis of a predetermined criterion of the rate-distortion type, for example. The macroblock MB$_{EL}$ is predicted using the macroblock MB$_{pred}$ which is constructed at step E73 from macroblocks e$^{up}$, f$^{up}$ and/or g$^{up}$ according to the coding mode cod_mode selected. During step E74, the prediction macroblock MB$_{pred}$ is subtracted pixel-by-pixel from the image data macroblock of the enhancement layer MB$_{EL}$. This step E74 generates a macroblock of residues noted as $MB_{EL}^{residues}$ which is then transformed, quantized and coded during step E75. Step E75 generates a bitstream, i.e. a series of bits. According to this embodiment, the macroblock MB$_{pred}$ is constructed during step E73 uniquely from blocks e, f, and/or g of the BL layer coded in intra mode.

If the macroblock MB$_{EL}$ is coded in intra$_{BL\_DC}$ mode, i.e. if cod_mode= intra$_{BL\_DC}$, then the macroblock MB$_{pred}$ is constructed as follows:

- if the pixels of the blocks e$^{up}$ and g$^{up}$ used to construct MB$_{pred}$ are available, i.e. if the pixels used are not outside the image and if blocks e and g are coded in intra mode, then:

$$MB_{pred}[x, y]= 1/32 * \left( \sum_{X=0}^{15} \mathbf{g}^{\mathbf{up}} [X,0] + \sum_{Y=0}^{15} \mathbf{e}^{\mathbf{up}} [0,Y] \right),$$

where x, y = 0..15

- otherwise, if the pixels of the block g$^{UP}$ used to construct MB$_{pred}$ are not available, then:

$$MB_{pred}[x, y]= 1/16 * \left( \sum_{Y=0}^{15} \mathbf{e}^{\mathbf{up}} [0,Y] \right),$$

where x, y = 0..15

- otherwise, if the pixels of the block $e^{UP}$ used to construct $MB_{pred}$ are not available, then:

$$MB_{pred}[x, y] = 1/16 * \left( \sum_{X=0}^{15} \mathbf{g^{up}}[X,0] \right),$$

where x, y = 0..15

- otherwise

$$MB_{pred}[x, y] = 128,$$

where x, y = 0..15

If the macroblock $MB_{EL}$ is coded in $intra_{BL\_Vert}$ mode, i.e. if cod_mode= $intra_{BL\_Vert}$, then the macroblock $MB_{pred}$ is constructed as follows:

- if the pixels of the block $g^{UP}$ used to construct $MB_{pred}$ are available, i.e. if the pixels used are not outside the image and if the block g is coded in intra mode, then:

$$MB_{pred}[x,y] = g^{UP}[x,0] ,$$

where x, y = 0..15
- otherwise this mode is not allowed.

If the macroblock $MB_{EL}$ is coded in $intra_{BL\_Hort}$ mode, i.e. if cod_mode= $intra_{BL\_Hort}$, then the macroblock $MBp_{red}$ is constructed as follows:

- if the pixels of the block $e^{UP}$ used to construct $MB_{pred}$ are available, i.e. if the pixels used are not outside the image and if the block e is coded in intra mode, then:

$$MBpred[x, y] = e^{UP}[0,y],$$

where x, y = 0..15
- otherwise this mode is not allowed.

If the macroblock $MB_{EL}$ is coded in $intra_{BL\_Plane}$ mode, i.e. if cod_mode= $intra_{BL\_Plane}$, then the macroblock $MBp_{red}$ is constructed as follows:

- if the pixels of the blocks $e^{UP}$ $f^{UP}$ and $g^{UP}$ used to construct $MB_{pred}$ are available, i.e. if the pixels used are not outside the image, we set $g^{UP}[16,0] = f^{UP}[0,0]$ and $e^{UP}[0,16] = f^{UP}[0,0]$, so that:

$$MB_{pred}[x, y] = (a+b*(x-7)+c*(y-7)),$$

where x, y = 0..15
where: - a=16*($e^{UP}[0,0] + g^{UP}[0,0]$), b= (5*H+32)/64, c= (5*V+32)/64,

$$- H = \sum_{x=1}^{8} x\left(\mathbf{g}^{\mathbf{UP}}[8-x,0] - \mathbf{g}^{\mathbf{UP}}[x+8,0]\right),$$

$$- V = \sum_{y=1}^{8} y\left(\mathbf{e}^{\mathbf{UP}}[0,8-y] - \mathbf{e}^{\mathbf{UP}}[0,8+y]\right).$$

-   otherwise this mode is not allowed.

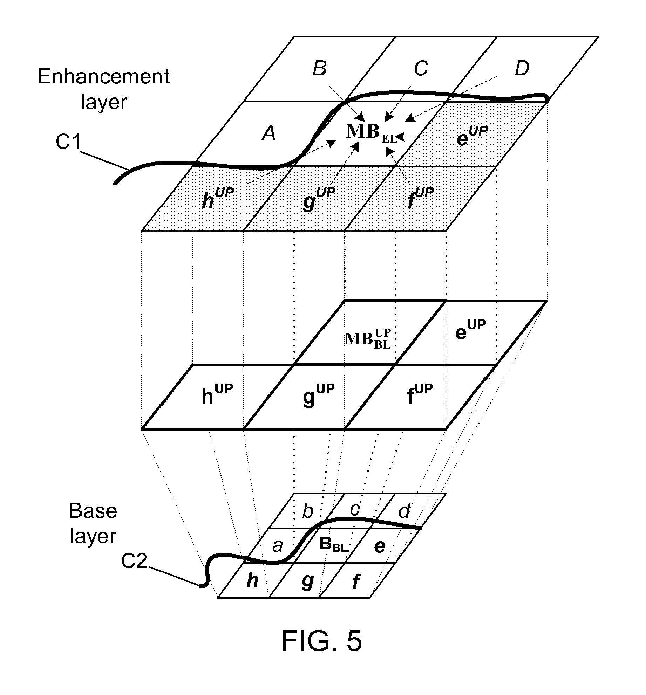

These two embodiments advantageously enable the coding of the image data of a macroblock $MB_{EL}$ of the EL layer according to an inter-layer intra mode, regardless of the mode for coding the corresponding block $B_{BL}$ in the BL layer, i.e. whether the block $B_{BL}$ is coded in intra or inter mode. Indeed, in the two embodiments, the corresponding block $B_{BL}$ is not used for the construction of the prediction macroblock $MB_{pred}$ according to the newly defined modes. More precisely, the prediction macroblock $MB_{pred}$ is generated only from image data blocks of the base layer that are different from the corresponding block $B_{BL}$. Hence the coding method according to the invention uses to a greater extent the spatial redundancy between the image data of the BL layer and the image data of the EL layer and thereby codes the EL layer more effectively, i.e. with fewer bits. Moreover, according to the two embodiements, only the blocks e, f, g located in the non-causal neighbouring area of the corresponding block $B_{BL}$ are used to construct the prediction macroblock $MB_{pred}$, which limits the complexity of the coding method by limiting the number of modes added. Blocks e, f and g being in the non-causal neighbouring area of the block $B_{BL}$, they are used to overcome the fact that the macroblock $MB_{EL}$ cannot be predicted spatially from macroblocks E, F, G and H of the EL layer (cf. figure 2) as these are located in its non-causal neighbouring area. In addition, they can be used to more precisely predict the macroblock $MB_{EL}$ if a transition (i.e. a contour C1 to which corresponds a contour C2 in the base layer) exists between the macroblocks A, B, C, D on the one hand, and the macroblock $MB_{EL}$ on the other hand, as illustrated in figure 5. Indeed, a prediction macroblock $MB_{pred}$ constructed from the macroblocks A, B, C and D neighbouring $MB_{EL}$ does not predict the macroblock $MB_{EL}$ with sufficient precision. In this case, the macroblock $MB_{EL}$ will be very costly to code, in terms of number of bits. On the other hand, a prediction macroblock $MB_{pred}$ constructed from blocks e, f, g and h predicts the macroblock $MB_{EL}$ with more precision. In this case, the macroblock $MB_{EL}$ will be less costly to code, in terms of number of bits, than in the previous case. The same modes, $intra_{BL\_DC}$, $intra_{BL\_Vert}$, $intra_{BL\_Hor}$, $intra_{BL\_Plane}$ can be defined by analogy to predict and code pixel blocks to which are associated with chrominance values.

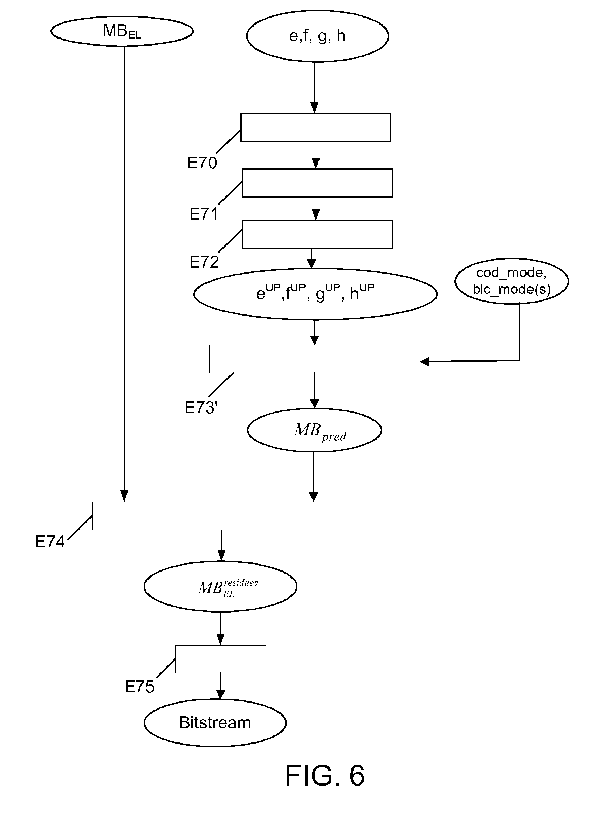

A third embodiment, shown in figure 6, is provided as part of the SVC coding standard defined in the JVT-T005 document of the ISO/IEC MPEG & ITU-T VCEG entitled "Draft of the Joint Draft 7", J. Reichel, H. Schwarz, M. Wien. The steps of the coding method shown in figure 6 identical to those in the coding method shown in figure 3 are identified in figure 6 using the same references and are not further described. According to SVC, the macroblock $MB_{EL}$ may be coded according to the modes intra16x16 intra4x4, or intra8x8 as defined by the extension of the MPEG-4 AVC standard relative to scalability. According to this embodiment, new coding modes, noted as $intra4x4_{BL}$, $intra8x8_{BL}$, and $intra16x16_{BL}$, are defined and can be selected to code the macroblock $MB_{EL}$. New block prediction modes of the macroblock $MB_{EL}$ are also defined. New inter-layer intra modes $intra4x4_{BL}$, $intra8x8_{BL}$, and $intra16x16_{BL}$ enable the macroblock $MB_{EL}$ to be coded from image data blocks e, f, g and/or h of the base layer previously coded at step E70, reconstructed at step E71, then up-sampled at stage E72, the up-sampled blocks having been noted as $e^{UP}$, $f^{UP}$, $g^{UP}$ and $h^{UP}$ respectively. These modes are defined for luminance image data; they may be extended directly for the chrominance blocks. The macroblock $MB_{EL}$ is predicted using a prediction macroblock $MB_{pred}$ which is constructed during step E73' according to the coding mode cod_mode selected and possibly the prediction modes blc_mode(s) of each of the blocks forming the said macroblock $MB_{EL}$. During step E74, the prediction macroblock $MB_{pred}$ is subtracted pixel-by-pixel from the image data macroblock of the enhancement layer $MB_{EL}$. This step E74 generates a macroblock of residues noted as $MB_{EL}^{residues}$ which is then transformed, quantized and coded during step E75. Step E75 generates a bitstream, i.e. a series of bits.

If the macroblock $MB_{EL}$ is coded in $intra4x4_{BL}$ mode, then each of the 16 blocks of 4 by 4 pixels, noted as 4x4 blocks, of the macroblock is predicted according to one of the following modes:

Hier_Intra_4x4_Vertical_Up, Hier_Intra_4x4_Horizontal_Left,

Hier_Intra_4x4_DC_Down_Right, Hier_Intra_4x4_Diagonal_Top_Right,
Hier_Intra_4x4_Diagonal_Top_Left, Hier_Intra_4x4_Vertical_Up_Left,
Hier_Intra_4x4_Horizontal_Top, Hier_Intra_4x4_Vertical_Up_Right and Hier_Intra_4x4_Horizontal_Down_Left.

The choice of the prediction mode, noted as blc_mode, of a 4x4 block may be made according to a rate-distortion type criterion. This choice may be made at the same time as the choice of the coding cod_mode of the macroblock.

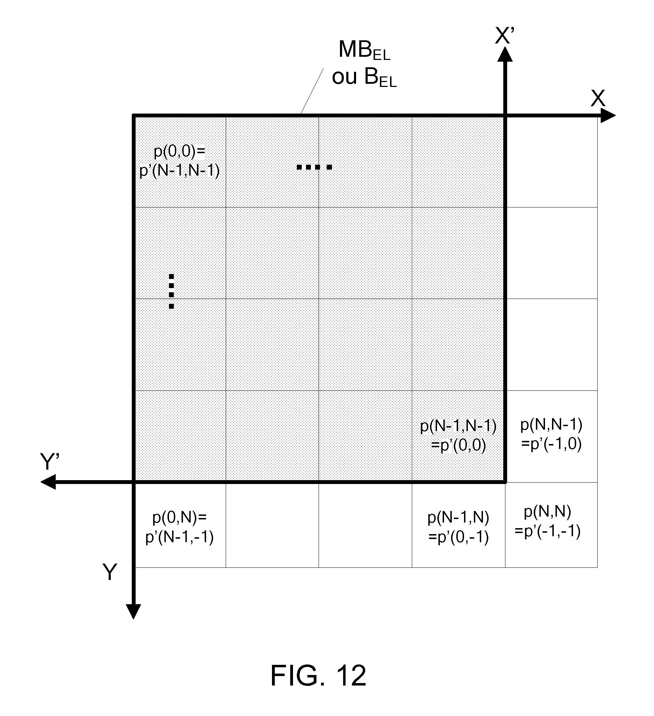

Note $pred4x4_L$ for the prediction block used to predict a 4x4 block, noted as $B_{EL}$ and shown in grey in figure 12, of the macroblock $MB_{EL}$, and $pred4x4_L[x, y]$ for the luminance value associated with the pixel of coordinates (x,y) in the prediction block, x indicating the horizontal position of the pixel in the block and y the vertical position, the pixel in the top left of the prediction block with the coordinates (0, 0) and the pixel in the bottom right with the coordinates (N-1, N-1), where N is the size of the block, a pixel of coordinates (x,y) having been situated in the column x and line y of the block. In reference to figure 12, a first axis (X,Y) is associated with the block $B_{EL}$ whose origin is the pixel in the top left of the block and a second axis (X',Y') is associated with the block $B_{EL}$ whose origin is the pixel in the bottom right of the block $B_{EL}$. Set x'=3-x, y'=3-y and p'[ x', y' ]=p[ 3-x, 3-y ]=p[ x, y ], p[x,y] is the luminance value associated with the pixel of coordinates (x,y) in the first axis and p'[x',y'] is the luminance value associated with the pixel of coordinates (x',y') in the second axis.

The prediction blocks $pred4x4_L$ associated with each 4x4 block of the macroblock $MB_{EL}$ form the prediction macroblock $MB_{pred}$.

If the macroblock $MB_{EL}$ is coded in $intra4x4_{BL}$ mode and if the block $B_{EL}$ is predicting according to the mode Hier_Intra_4x4_Vertical_Up then the block $pred4x4_L$ is constructed as follows:

$$pred4x4_L[\ x,\ y\ ] = p'[\ x',\ -1\ ],$$

where x=0..3 and y=0..3

The prediction mode Hier_Intra_4x4_Vertical_Up is only allowed if the pixels p'[ x', -1 ] are available, i.e. if they exist and if they were generated from a pixel block of the BL layer (i.e. e, f, g, h) coded in intra mode.

If the macroblock $MB_{EL}$ is coded in $intra4x4_{BL}$ mode and if the block $B_{EL}$ is predicted according to the mode Hier_Intra_4x4_Horizontal_Left, then the block $pred4x4_L$ is constructed as follows:

$$pred4x4_L[\ x,\ y\ ] = p'[\ -1,\ y'\ ],$$

where x=0..3 and y=0..3

The prediction mode Hier_Intra_4x4_Horizontal_Left is only allowed if the pixels p'[ -1, y' ] are available, i.e. if they exist and if they were generated from a pixel block of the BL layer coded in intra mode.

If the macroblock $MB_{EL}$ is coded in $intra4x4_{BL}$ mode and if the block $B_{EL}$ is predicted according to the mode Hier_Intra_4x4_DC_Down_Right, then the block $pred4x4_L$ is constructed as follows:

- If the pixel p'[x', -1 ], where x=0..3 and the pixel p'[ -1, y' ], where y=0..3 are available, i.e. if they exist and if they have been generated from a pixel block of the BL layer coded in intra mode, the values $pred4x4_L[\ x,\ y\ ]$, where x=0..3 and y=0..3 are determined as follows:

  $$pred4x4_L[\ x,\ y\ ] = (\ p'[\ 0,\ -1\ ] + p'[\ 1,\ -1\ ] + p'[\ 2,\ -1\ ] + p'[\ 3,\ -1\ ] + p'[-1,\ 0] + p'[-1,\ 1] + p'[-1,\ 2] + p'[-1,\ 3] + 4) >> 3$$

- otherwise, i.e. if one of the pixels p'[ x', -1 ], where x=0..3 is not available and all the pixels p'[-1, y'], where y=0..3 are available, the values $pred4x4_L[\ x,\ y\ ]$, where x=0..3 and y=0..3 are determined as follows:

  $$pred4x4_L[\ x,y\ ] = (\ p'[\ -1,\ 0\ ] + p'[\ -1,\ 1\ ] + p'[\ -1,\ 2\ ] + p'[\ -1,\ 3\ ] + 2) >> 2$$

- otherwise, i.e. if one of the pixels p'[ -1, y' ], where y = 0..3 is not available and if all the pixels p'[ x', -1 ], where x=0..3 are available, the values $pred4x4_L[\ x,\ y\ ]$, where x=0..3 and y=0..3 are determined as follows:

- $pred4x4_L[x,y]=(p'[0,-1]+p'[1,-1]+p'[2,-1]+p'[3,-1]+2)>>$

- otherwise (if some of the pixels p'[ x', -1 ], where x=0..3 and some of the pixels p'[-1, y'], where y=0..3 are available, the values pred4x4$_L$[ x, y ], where x=0..3 and y=0..3 are determined as follows: pred4x4$_L$[ x, y ] = ( 1 « ( BitDepth$_Y$ - 1 ) )

The prediction mode Hier_Intra_4x4_DC_Down_Right can always be used.
If the macroblock MB$_{EL}$ is coded in intra4x4$_{BL}$ mode and if the block B$_{EL}$ is predicted according to the mode Hier_Intra_4x4_Diagonal_Top_Right, then the block pred4x4$_L$ is constructed as follows:

- If x'=3 and y'=3,
  pred4x4$_L$[x,y]=(p'[6,-1]+3*p'[7,-1]+2)>>2

- otherwise (i.e. x' is not equal to 3 or y' is not equal to 3),
  pred4x4$_L$[x, y]=(p'[x' + y', -1 ]+2 *p'[ x' + y' + 1,-1]+p'[ x' + y' + 2, - 1 ]+2)>>2

The prediction mode Hier_Intra_4x4_Diagonal_Top_Right is only allowed if the pixels p'[x',-1] where x=0..7 are available.
If the macroblock MB$_{EL}$ is coded in intra4x4$_{BL}$ mode and if the block B$_{EL}$ is predicted according to the mode Hier_Intra_4x4_Diagonal_Top_Left, then the block pred4x4$_L$ is constructed as follows:

- If x' > y',
  pred4x4$_L$[x,y]=(p'[x'-y'-2,-1]+2*p'[x'-y'-1,-1] + p'[ x' - y', -1 ]+2)>>2

- Else, if x' > y',
  pred4x4$_L$[x,y]=(p'[-1,y'-x'-2]+2*p'[-1,y'-x'-1]+p'[-1,y'-x-]+2)>>2

- else (i.e. if x' is equal to y'),
  pred4x4$_L$[x,y] = (p'[0, -1 ] + 2* p'[-1, -1 ] + p'[-1, 0] + 2)>>2

The prediction mode Hier_Intra_4x4_Diagonal_Top_Left is only allowed if the pixels p'[ x', -1 ] where x=0..7 and p'[ -1, y' ] where y=0..7 are available.
If the macroblock MB$_{EL}$ is coded in intra4x4$_{BL}$ mode and if the block B$_{EL}$ is predicted according to the mode Hier_Intra_4x4_Vertical_Up_Left, then with the variable zVR' equal to 2 * x' - y', the block pred4x4$_L$ is constructed as follows, where x=0..3 and y=0..3:

- If zVR' is equal to 0, 2, 4 or 6,
  pred4x4$_L$[x,y]=(p'[x'-(y'>>1 )-1,-1 ]+p'[x'-(y'>>1 ),-1 ]+1) » 1

- else, if zVR' is equal to 1, 3 or 5,
  pred4x4$_L$[x,y]=(p'[x'-(y'>>1 )-2,-1]+2*p'[x'-(y'>>1 )-1,-1 ] +p'[x'-(y'>>1 ),-1 ]+2)>>2

- else, if zVR' is equal to -1,
  pred4x4L[x,y] = (p'[-1,0]+2*p'[-1,-1]+p'[0,-1]+2)>>2

- else (i.e. if zVR' is equal to -2 or -3),
  pred4x4$_L$[ x, y ] = ( p'[ -1, y' - 1 ] + 2 * p'[ -1, y' - 2 ] + p'[ -1, y' - 3]+2) » 2

The prediction mode Hier_Intra_4x4_Vertical_Up_Left is only allowed if the pixels p'[ x', -1 ] where x=0..7 and p'[ -1, y' ] where y=0..7 are available.
If the macroblock MB$_{EL}$ is coded in intra4x4$_{BL}$ mode and if the block B$_{EL}$ is predicted according to the mode Hier_Intra_4x4_Horizonta_Top, then with the variable zHD' equal to 2*y' - x', the block pred4x4$_L$ is constructed as follows, where x=0..3 and y=0..3:

- If zHD' is equal to 0, 2, 4 or 6,
  pred4x4$_L$[ x, y ] = (p'[ -1, y' -( x' » 1 ) - 1 ] + p'[ -1, y' - ( x' » 1 ) ] + 1 ) » 1

- else, if zHD' is equal to 1, 3 or 5,
  pred4x4$_L$[x, y ]=(p'[ -1,y'-(x'>>1)-2 ]+2*p'[-1,y' - ( x' >> 1)-1 ] + p'[ -1, y'-(x'>>1)]+2)>>2

- else, if zHD' is equal to -1,

pred4x4$_L$[x,y] = (p'[-1,0]+2*p'[-1,-1]+p'[0,-1]+2)>>2

- else (i.e. if zHD' is equal to -2 or -3),
  pred4x4$_L$[ x, y ] = (p'[ x' -1, -1 ]+2*p'[ x' - 2, -1 ] + p'[ x' - 3, -1 ] + 2)>> 2

The prediction mode Hier_Intra- 4x4_Horizontal_Top is only allowed if the pixels p'[ x', -1 ] where x=0..7 and p'[ -1, y' ] where y=0..7 are available.

If the macroblock MB$_{EL}$ is coded in intra4x4$_{BL}$ mode and if the block B$_{EL}$ is predicted according to the mode Hier_Intra_4x4_Vertical_Up_Right, then the block pred4x4$_L$ is constructed as follows the block pred4x4$_L$ is constructed as follows where x=0..3 and y=0..3:

- If y' is equal to 0 or 2,
  pred4x4$_L$[ x,y ]= (p'[ x'+(y'>>1), -1 ] + p'[ x' + ( y' » 1) +1, -1 ] + 1) » 1

- else (y' is equal to 1 or 3),
  pred4x4$_L$[ x, y ] = ( p'[ x' + ( y' » 1 ), -1 ] + 2 * p'[ x' + ( y >>1) + 1, -1 ] +p'[ x'+(y'>>1)+2,-1 ]+2)>>2

If the macroblock MB$_{EL}$ is coded in intra4x4$_{BL}$ mode and if the block B$_{EL}$ is predicted according to the mode Hier_Intra_4x4_Horizontal_Down_Left, then with a variable zHU' equal to x' + 2 *y', the block pred4x4$_L$ is constructed as follows where x=0..3 and y=0..3:

- If zHU' is equal to 0, 2 or 4
  pred4x4$_L$[x, y ] = ( p'[ -1, y'+(x>>1) ]+p'[ -1, y'+( x' » 1 ) +1]+1) » 1

- else, if zHU' is equal to 1 or 3
  pred4x4$_L$[ x, y ] = ( p'[ -1, y' + ( x' » 1 )] + 2 * p'[ -1, y' + ( x' » 1) + 1 ] +p'[-1,y'+(x'>>1)+2]+2)>>2

- else, if zHU' is equal to 5,
  pred4x4$_L$[x,y]=(p'[-1,2]+3*p'[-1,3]+2)>>2

- else (i.e. if zHU' > 5),
  pred4x4$_L$[x, y ] = p'[ -1, 3 ]

If the macroblock MB$_{EL}$ is coded in intra8x8$_{BL}$ mode, then each of the 4 blocks of 8 by 8 pixels, noted as 8x8 blocks, of the macroblock is predicted according to one of the following modes:

Hier_Intra_8x8_Vertical, Hier_Intra_8x8_Horizontal, Hier_intra_8x8_DC,
Hier_Intra_8x8_Diagonal_Up_Right, Hier_Intra_8x8_Diagonal_Up_Left,
Hier_Intra_8x8_Vertical_Left, Hier_Intra_8x8_Horizontal_Up,
Hier_Intra_8x8_Vertical_ Right and Hier_intra_8x8_Horizontal_Down.

The choice of the prediction mode of an 8x8 block may be made according to a rate-distortion type criterion.
Note pred8x8$_L$ for the prediction block used to predict an 8x8 block, noted as B$_{EL}$ and shown in grey in figure 12, of the macroblock MB$_{EL}$ and pred8x8$_L$[x, y] for the luminance value associated with the pixel of coordinates (x,y) in the block, x indicating the horizontal position of the pixel in the 8x8 block and y the vertical position. The pixel in the top left of a block of pixels has the coordinates (0, 0) and the pixel in the bottom right has the coordinates (N-1, N-1), where N is the size of the 8x8 block, a pixel of coordinates (x,y) being situated in the column x and line y of the block.
In reference to figure 12, a first axis (X,Y) is associated with the block B$_{EL}$ whose origin is the pixel in the top left of the block and a second axis (X',Y') is associated with the block B$_{EL}$ whose origin is the pixel in the bottom right of the block B$_{EL}$. Assume that x'=7-x, y'=7-y and p'[x', y']=p[7-x'0.7-y']=p[x,y], where p[x,y] is the luminance value associated with the pixel of coordinates (x,y) in the first axis and p'[x',y'] is the luminance value associated with the pixel of coordinates (x',y') in the second axis.
The said reference pixels filtered and noted as p"[ x', y' ] pour x'=-1, y'=-1..7 and x'=0..15, y'=-1 are constructed as follows:

• if all the pixels p'[ x', -1 ] where x'=0..7 are available, then:

  o the value of p"[ 0, -1 ] is obtained as follows:

■ if p'[ -1, -1 ] is available
p"[ 0, -1 ] = (p'[ -1, -1 ] + 2*p'[ 0, -1 ] + p'[ 1, -1 ] + 2) >> 2
■ else
p"[ 0, -1 ] = ( 3*p'[0, -1 ] + p'[ 1, -1 ] + 2) >> 2

o the values of p"[ x', -1 ], where x'=1..7 are obtained as follows
p"[ x', -1 ] = ( p'[ x'-1, -1 ] + 2*p'[ x', -1 ] + p'[ x'+1, -1 ] + 2) » 2

• if all the pixels p'[ x', -1 ] where x'=7..15 are available, then:

o the values of p"[ x', -1 ], where x'=8..14 are obtained as follows:
p"[ x', -1 ] = ( p'[ x'-1, -1 ] + 2* p'[ x', -1 ] + p[ x'+1, -1 ] + 2) » 2
o the value of p"[ 15, -1 ] is obtained as follows
p"[ 15, -1 ] = ( p'[ 14, -1 ] + 3*p'[ 15, -1 ] + 2 >>2

• if the pixel p'[ -1, -1 ] is available, the value of p"[ -1, -1 ] is obtained as follows

o if the pixel p'[ 0, -1 ] is available or the pixel p'[ -1, 0 ] is not available, then

■ if the pixel p'[ 0, -1 ] is available, then
p"[ -1, -1 ] = (3*p'[ -1, -1 + p'[ 0, -1 ] + 2 ) >> 2
■ else (p'[ 0, -1 ] is not available and p'[ -1, 0 ] is available), then
p"[-1,-1]=(3*p'[-1,-1]+p'[-1,0]+2)>>2

o else (p'[ 0, -1 ] is available and p'[ -1, 0 ] is available)
p"[ -1, -1 ] = ( p'[ 0, -1 ] + 2*p'[ -1, -1 ] + p'[ -1, 0 ] + 2 ) >> 2

• if all the pixels p'[ -1, y' ] where y'=0..7 are available, then

o the value of p"[ -1, 0 ] is obtained as follows:

■ if p'[ -1, -1 ] is available
p"[ -1,0]= (p'[ -1, -1 ] + 2*p'[ -1, 0 ] + p'[ -1, 1 ] + 2 ) » 2
■ else (if p'[ -1, -1 ] is not available)
p"[-1,0]=(3*p'[-1,0]+p'[-1,1]+2)>>2

• the values of p"[ -1, y' ], where y'=1..6 are obtained as follows
p"[ -1, y' ] = ( p'[-1, y'-1] + 2*p'[ -1, y- ] + p'[ -1, y'+1 ] + 2) » 2
• the value of p"[ -1,7] is obtained as follows:
p"[-1,7] = (p'[-1,6] + 3*p'[-1,7]+2>>2

If the macroblock $MB_{EL}$ is coded in intra8x8$_{BL}$ mode and if the block $B_{EL}$ is predicting according to the mode Hier_Intra_8x8_Vertical then the block pred8x8$_L$ is constructed as follows:

pred8x8$_L$[ x, y ] = p"[ x', -1 ], where x'=0..7 and y'=0..7

The prediction mode Hier_Intra_8x8_Vertical is only allowed if the pixels p"[ x', -1 ] are available, i.e. if they exist and if they were generated from a pixel block g of the BL layer coded in intra mode.
If the macroblock $MB_{EL}$ is coded in intra8x8$_{BL}$ mode and if the block $B_{EL}$ is predicted according to the mode Hier_Intra_8x8_Horizontal then the block pred8x8$_L$ is constructed as follows:

pred8x8$_L$[ x, y ] = p"[ -1, y' ] , where x'=0..7 and y'=0..7

The prediction mode Hier_Intra_4x4_Horizontal is only allowed if the pixels p'[ -1, y' ] are available, i.e. if they exist and if they were generated from a pixel block e of the BL layer coded in intra mode.
If the macroblock $MB_{EL}$ is coded in intra8x8$_{BL}$ mode and if the block $B_{EL}$ is predicted according to the mode Hier_Intra_8x8_DC, then the block pred8x8$_L$ is constructed as follows:

- If all the pixels p'[x',-1], where x=0..7 and the pixels p'[-1,y'], where y=0..7 are available, i.e. if they exist and if they have been generated from a block of pixels of the BL layer coded in intra mode, the values pred8x8$_L$[ x, y], where x=0..7 and y=0..7 are determined as follows:

$$\text{pred8x8}_L[\, x, y\,] = \left( \sum_{x'=0}^{7} p''[x',-1] + \sum_{y'=0}^{7} p''[-1, y'] + 8 \right) >> 4$$

- otherwise, i.e. if one of the pixels p'[x', -1 ], where x=0..3 is not available and all the pixels p'[-1,y'], where y=0..3 are available, the values pred4x4$_L$[x, y ], where x=0..3 and y=0..3 are determined as follows:

    pred4x4$_{L[}$ x,y ] = ( p'[ -1, 0 ] + p'[ -1, 1 ] + p'[ -1, 2 ] + p'[ -1, 3 ] + 2 ) » 2

- otherwise, i.e. if one of the pixels p'[x', -1 ], where x=0..7 is not available and all the pixels p'[-1, y' ], where y=0..7 are available, the values pred8x8$_{L[}$ x, y ], where x=0..7 and y=0..7 are determined as follows:

$$\text{pred8x8}_L[\, x, y\,] = \left( \sum_{y'=0}^{7} p''[-1, y'] + 4 \right) >> 3$$

- otherwise, if some of the pixels p'[ -1, y' ], where y'=0..7 and all the pixels p'[x', -1], where x'=0..7 are available, the values pred8x8$_L$[ x, y ], where x'=0..7 and y'=0..7 are determined as follows:

$$\text{pred8x8}_L[\, x, y\,] = \left( \sum_{x'=0}^{7} p''[x',-1] + 4 \right) >> 3$$

- otherwise (some pixels p'[ x', -1 ], where x'=0..7 and some pixels p'[ -1, y' ], where y'=0..7 are not available, the values pred8x8$_L$[ x, y ], where x'=0..7 and y'=0..7 are obtained as follows:

    pred8x8$_L$[ x, y ] = ( 1 << ( BitDepth$_y$ - 1 ) )

The prediction mode Hier_Intra_4x4_DC can always be used.

If the macroblock MB$_{EL}$ is coded in intra8x8$_{BL}$ mode and if the block B$_{EL}$ is predicted according to the mode Hier_Intra_8x8_Diagonal_Up_Right, then the block pred8x8$_L$ is constructed as follows:

- If x' is equal to 7 and y' is equal to 7,

$$\text{pred8x8}_L[\, x, y\,] = (\, p''[\, 14, -1\,] + 3 * p''[\, 15, -1\,] + 2\,) >> 2$$

- else (i.e. x' is not equal to 7 or y' is not equal to 7),

$$\text{pred8x8}_L[\, x, y\,] = (\, p''[\, x' + y', -1\,] + 2 * p''[\, x' + y' + 1, -1\,] + p''[\, x' + y' + 2, -1\,]$$
$$+ 2\,) >> 2$$

The prediction mode Hier_intra_8x8_Diagonal_Up_Right is only allowed if the pixels p'[x',-1] where x=0..15 are available.

If the macroblock MB$_{EL}$ is coded in intra8x8$_{BL}$ mode and if the block B$_{EL}$ is predicted according to the mode Hier_intra_8x8_Diagonal_Up_Left, then the block pred8x8$_L$ is constructed as follows:

- if x' is greater than y',

$$pred8x8_L[\, x, y\, ] = (\, p''[\, x' - y' - 2, -1] + 2 * p''[\, x' - y' - 1, -1\, ] + p''[\, x' - y', -1\, ] + 2\, ) >> 2$$

- else, if x' is less than y',

$$pred8x8_L[\, x, y\, ] = (\, p''[\, -1, y' - x' - 2\, ] + 2 * p''[\, -1, y' - x' - 1\, ] + p''[\, -1, y' - x'\, ] + 2\, ) >> 2$$

- else (i.e. if x' is equal to y'),

$$pred8x8_L[\, x, y\, ] = (\, p''[\, 0, -1\, ] + 2 * p''[\, -1, -1\, ] + p''[\, -1, 0\, ] + 2\, ) >> 2$$

The prediction mode Hier_Intra_8x8_Diagonal_Up_Right is only allowed if the pixels p'[ x', -1 ] where x'=0..7 and p'[ -1, y' ] where y'=-1 ..7 are available.

If the macroblock MB$_{EL}$ is coded in intra8x8$_{BL}$ mode and if the block B$_{EL}$ is predicted according to the mode Hier_Intra_8x8_Vertical_Left, then with the variable zVR' equal to 2 * x'- y', the block pred4x4$_L$ is constructed as follows, where x'=0..7 and y'=0..7:

- If zVR' is equal to 0, 2, 4, 6, 10, 12 or 14

$$pred8x8_L[\, x, y\, ] = (\, p''[\, x' - (\, y' >> 1\, ) - 1, -1\, ] + p''[\, x' - (\, y' >> 1\, ), -1\, ] + 1\, ) >> 1$$

- else, if zVR' is equal to 1, 3, 5, 7, 9, 11 or 13

$$pred8x8_L[\, x, y\, ] = (\, p''[\, x' - (\, y' >> 1\, ) - 2, -1] + 2 * p''[\, x' - (\, y' >> 1\, ) - 1, -1\, ] + p''[\, x' - (\, y' >> 1\, ), -1\, ] + 2\, ) >> 2$$

- else, if zVR' is equal to -1,

$$pred8x8_L[\, x, y\, ] = (\, p''[\, -1, 0\, ] + 2 * p''[\, -1, -1\, ] + p''[\, 0, -1\, ] + 2\, ) >> 2$$

- else (i.e. if zVR' is equal to -2, -3, -4, -5, -6, -7),

$$pred8x8_L[\, x, y\, ] = (\, p''[\, -1, y' - 2*x' - 1\, ] + 2 * p''[\, -1, y' - 2*x' - 2\, ] + p''[\, -1, y' - 2*x' - 3\, ] + 2\, ) >> 2$$

The prediction mode Hier_Intra_8x8_Vertical_Left is only allowed if the pixels p'[ x', -1 ] where x=0..7 and p'[ -1, y' ] where y=-1..7 are available.

If the macroblock $MB_{EL}$ is coded in intra8x8$_{BL}$ mode and if the block $B_{EL}$ is predicted according to the mode Hier_Intra_8x8_Horizontal_Up, then with the variable zHD' equal to 2*y'-x', the block pred8x8$_L$ is constructed as follows, where x'=0..7 and y'=0..7:

- If zHD' is equal to 0, 2, 4, 6, 10, 12 or 14

$$\text{pred8x8}_L[\,x, y\,] = (\,p''[\,-1, y'' - (\,x'' >> 1\,) - 1\,] + p''[\,-1, y' - (\,x' >> 1\,)\,] + 1\,) >> 1$$

- else, if zHD' is equal to 1, 3, 5, 7, 9, 11 or 13

$$\text{pred8x8}_L[\,x, y\,] = (p''[\,-1, y'-(x'>>1)-2\,]+2*p''[\,-1, y' - (\,x' >> 1\,) - 1\,] + p''[\,-1, y' - (\,x' >> 1\,)\,] + 2\,) >> 2$$

- else, if zHD' is equal to -1,

$$\text{pred8x8}_L[\,x, y\,] = (\,p''[\,-1, 0\,] + 2 * p''[\,-1, -1\,] + p''[\,0, -1\,] + 2\,) >> 2$$

- else (i.e. if zHD' is equal to -2, -3, -5, -6, -7),

$$\text{pred8x8}_L[\,x, y\,] = (p''[\,x' -2*y' -1, -1]+2*p''[\,x' -2*y' - 2, -1\,] + p''[\,x' -2*y' - 3, -1\,] + 2\,) >> 2$$

The prediction mode Hier_Intra_8x8_Horizontal_Up is only allowed if the pixels p'[ x', -1 ] where x=0..7 and p'[ -1, y' ] where y=-1..7 are available.

If the macroblock $MB_{EL}$ is coded in intra8x8$_{BL}$ mode and if the block $B_{EL}$ is predicted according to the mode Hier_Intra_8x8_Vertical_Right, then the block pred8x8$_L$ is constructed as follows where x'=0..7 and y'=0..7:

- if y' is equal to 0, 2, 4 or 6

$$\text{pred8x8}_L[\,x,y\,] = (p''[\,x'+(y'>>1), -1\,] + p''[\,x' + (\,y' >> 1) +1, -1\,] + 1) >> 1$$

- else (y' is equal to 1, 3, 5, 7),

$$\text{pred8x8}_L[\,x, y\,] = (\,p''[\,x' + (\,y' >> 1\,), -1\,] + 2 * p''[\,x' + (\,y >> 1\,) + 1, -1\,] + p''[\,x'+(y'>>1)+2,-1\,]+2)>>2$$

The prediction mode Hier_Intra_8x8_Vertical_Right is only allowed if the pixels p'[ x', -1 ] where x'=0..15 are available.

If the macroblock $MB_{EL}$ is coded in intra8x8$_{BL}$ mode and if the block $B_{EL}$ is predicted according to the mode Hier_Intra_8x8_Horizontal_Down, then with zHU' as a variable equal to x' + 2 *y', the block pred8x8$_L$ is constructed as follows, where x'=0..7 and y'=0..7:

- If zHU' is equal to 0, 2, 4, 6, 8, 10 or 12

$$\text{pred8x8}_L[\,x,\,y\,] = (\,p''[\,-1,\,y'+(x'>>1)\,]+p''[\,-1,\,y'+(\,x'>>1\,)+1]+1) >> 1$$

- else, if zHU' is equal to 1, 3, 5, 7, 9 or 11

$$\text{pred8x8}_L[\,x,\,y\,] = (\,p''[\,-1,\,y'+(\,x'>>1\,)\,]+2*p''[\,-1,\,y'+(\,x'>>1\,)+1\,]+p''[$$
$$-1,\,y'+(\,x'>>1\,)+2\,]+2\,) >> 2$$

- else, if zHU' is equal to 13,

$$\text{pred8x8}_L[\,x,\,y\,] = (\,p''[\,-1,\,6\,]+3*p''[\,-1,\,7\,]+2\,) >> 2$$

- else (i.e. if zHU' is greater than 13),

$$\text{pred8x8}_L[\,x,\,y\,] = p''[\,-1,\,7\,]$$

The prediction mode Hier_Intra_8x8_Horizontal_Down is only allowed if the pixels p'[ -1, y' ] where y=0..7 are available. If the macroblock $MB_{EL}$ is coded in intra16x16$_{BL}$ mode, then the said macroblock $MB_{EL}$ is predicted according to one of the following modes:

Hier_Intra_16x16- Vertical, Hier_Intra_16x16_Horizontal,
Hier_Intra_16x16_DC and Hier_Intra_16x16_Plane.

The choice of the prediction mode of the 16x16 macroblock may be made according to a rate-distortion type criterion. Note pred16x16$_L$ for the prediction macroblock used to predict the macroblock $MB_{EL}$ shown in grey in figure 12 and pred16x16$_L$[x, y] for the luminance value associated with the pixel of coordinates (x,y) in the macroblock, x indicating the horizontal position of the pixel in the macroblock and y the vertical position. The pixel in the top left of a block of pixels has the coordinates (0, 0) and the pixel in the bottom right has the coordinates (N-1, N-1), where N is the size of the macroblock, a pixel of coordinates (x,y) being situated in the column x and line y of the macroblock. In reference to figure 12, a first axis (X,Y) is associated with the macroblock $MB_{EL}$ whose origin is the pixel in the top left of the macroblock and a second axis (X',Y') is associated with the macroblock $MB_{EL}$ whose origin is the pixel in the bottom right of the block $MB_{EL}$. Assume that x'=15-x, y'=15-y and p'[x', y']=p[15-x',15-y']=p[x,y], where p[x,y] is the luminance value associated with the pixel of coordinates (x,y) in the first axis and p'[x',y'] is the luminance value associated with the pixel of coordinates (x',y') in the second axis.
If the macroblock $MB_{EL}$ is coded in intra 16x16$_{BL}$ mode and is predicted according to the mode Hier_Intra_16x16_Vertical, then the macroblock pred16x16$_L$ is constructed as follows where x=0..15 and y=0..15:

pred16x16$_L$[x,y]=p'[x',-1]

The prediction mode Hier_Intra_16x16_Vertical is only allowed if the pixels p'[ x', -1 ] are available, i.e. if they exist and if they were generated from a pixel block g of the BL layer coded in intra mode.
If the macroblock $MB_{EL}$ is coded in intra16x16$_{BL}$ mode and is predicted according to the mode Hier_intra_16x16_Horizontal, then the macroblock pred16x16$_L$ is constructed as follows where x=0..15 and y=0..15:

pred16x16$_L$[ x, y ] = p'[ -1, y' ]

The prediction mode Hier_Intra_16x16_Vertical is only allowed if the pixels p'[ -1, y' ] are available, i.e. if they exist and if they were generated from a pixel block e of the BL layer coded in intra mode.
If the macroblock $MB_{EL}$ is coded in intra16x16$_{BL}$ mode and is predicted according to the mode Hier_Intra_16x16_DC, then the macroblock pred16x16$_L$ is constructed as follows where x=0..15 and y=0..15:

- If all the pixels p'[ x', -1 ] and all the pixels p'[ -1, y'] are available, i.e. if they exist and if they are generated from pixel blocks g and e of the BL layer coded in intra mode

$$\text{pred16x16}_L\,[\,x,\,y\,] = \left( \sum_{x'=1}^{15} p'[x',-1] + \sum_{y'=1}^{15} p'[-1,y'] + 16 \right) >> 5$$

- Otherwise, if one of the pixels p'[ x', -1 ] is not available and if all the pixels p'[ -1, y' ] are available, if they exist and if they are generated from the block of pixels e of the BL layer coded in intra mode

$$\text{pred16x16}_L\,[\,x,\,y\,] = \left( \sum_{y'=1}^{15} p'[-1,y'] + 8 \right) >> 4$$

- Otherwise, if one of the pixels p'[ -1, y' ] is not available and if all the pixels p'[ x', -1 ] are available, if they exist and if they are generated from the block of pixels g of the BL layer coded in intra mode

$$\text{pred16x16}_L\,[\,x,\,y\,] = \left( \sum_{x'=1}^{15} p'[x',-1] + 8 \right) >> 4$$

- Otherwise if one of the pixels p'[ -1, y' ] is not available and if one of the pixels p'[ x', -1 ] is not available, then:

  pred16x16$_L$ [ x, y ] = ( 1 << ( BitDepth$_Y$- 1 ) )

If the macroblock MB$_{EL}$ is coded in intra16x16$_{BL}$ mode and is predicted according to the mode Hier_Intra_ 16x16_Plane, then the macroblock pred16x16$_L$ is constructed as follows where x=0..15 and y=0..15:

- If all the pixels p'[ x', -1 ] and all the pixels p'[ -1, y' ] are available, i.e. if they exist and if they are generated from pixel blocks g and e of the BL layer coded in intra mode
  pred16x16$_L$[x,y]=Clip1y((a'+b'*(x'-7)+c'*(y'-7)+16)>>5),

where: - Clip1y (x) = clip3 (0,(1<<BitDepth$_Y$)-1,x), where

$$\text{clip3}(x, y, z) \begin{cases} = x & \text{if } z < x \\ = y & \text{if } z > y \\ = z & \text{otherwise} \end{cases}$$

- a' = 16 * (p'[-1, 15] + p'[15, -1])
- b' = (5 * H' + 32) >> 6
- c' = (5 * V' + 32) >> 6

$$\text{H'} = \sum_{x'=0}^{7} (x'+1) * (p'[8+x',-1] - p'[6-x',-1])$$

$$V' = \sum_{y'=0}^{7} (x'+1) * \left( p'[-1, 8+y'] - p'[-1, 6-y'] \right)$$

Each 8x8 chrominance block is predicted according to the 4 following prediction modes: Hier_intra_Chroma_DC, Hier_intra_Chroma_Horizontal, Hier_intra_Chroma_Vertical and Hier_intra_Chroma_Plane. These modes are defined by analogy to the intra 16x16 prediction modes, namely Hier_Intra_16x16_DC, Hier_Intra_16x16_Horizontal, Hier_Intra_16x16_Vertical and Hier_Intra_16x16_Plane. The same prediction mode is always used for both chrominance blocks. It should be noted that if one of the 8x8 luminance blocks is coded in intra mode, then the two chrominance blocks are also coded in intra.

This third embodiment has the same advantages as the second

- It uses the spatial redundancy that exists between the images of the BL layer and the images of the EL layer to a greater extent, i.e. even when the block $B_{BL}$ of the base layer corresponding to the macroblock $MB_{EL}$ is coded in inter mode since said block $B_{BL}$ is not used to construct the prediction macroblock $MB_{pred}$;
- It enables the more effective coding of a macroblock $MB_{EL}$ separated from its neighbouring macroblocks A, B, C and D by a contour by predicting the said macroblock $MB_{EL}$ from blocks e, f, g and/or h; and
- It enables the macroblock $MB_{EL}$ to be coded in such a way that it is not necessary to reconstruct the entire BL layer to reconstruct the EL layer, in particular the blocks of the BL layer coded in inter mode, i.e. predict temporally, without having to be reconstructed.

Moreover, only the blocks e, f, g and h located in the non-causal neighbouring area of the corresponding block $B_{BL}$ are used, which limits the complexity of the coding method by limiting the number of modes added. As blocks e, f, g and h are in the non-causal neighbouring area of the block $B_{BL}$, they are used to overcome the fact that the macroblock $MB_{EL}$ cannot be predicted spatially from macroblocks E, F, G and H of the EL layer (cf. figure 2) as these are located in its non-causal neighbouring area.

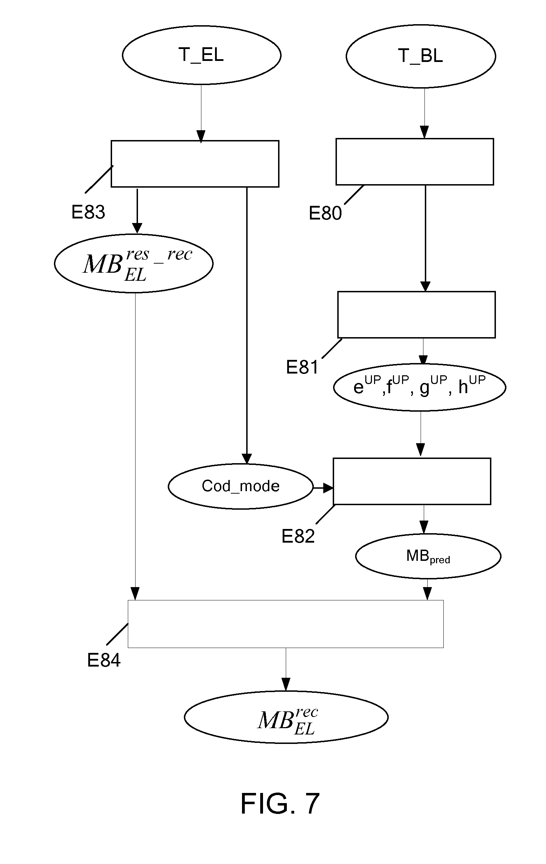

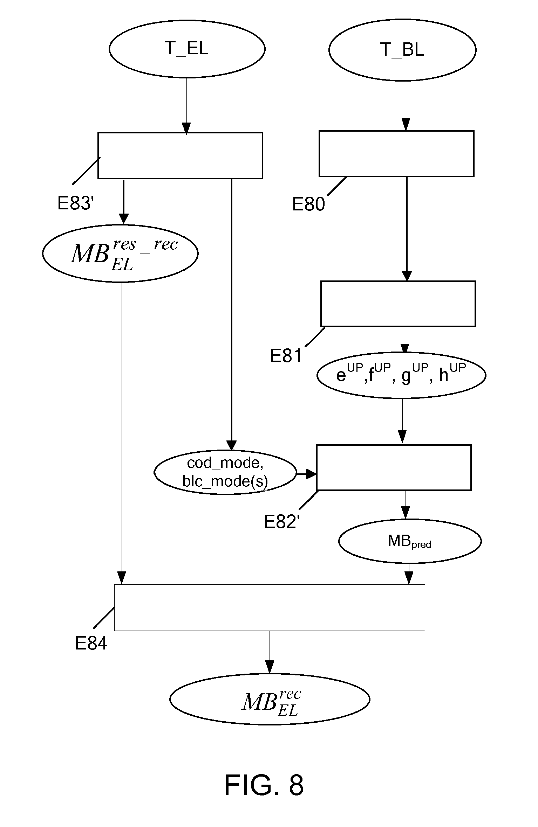

The invention also relates to a method for decoding a part of a bitstream with a view to the reconstruction of a macroblock noted as $MB_{EL}^{rec}$ of a sequence of images presented in the form of a base layer and at least one enhancement layer. The macroblock $MB_{EL}^{rec}$ to which corresponds a block in the base layer, called a corresponding block, belongs to the enhancement layer. In reference to figures 7 and 8, the method includes step E80 for reconstructing the image data blocks e, f, g and/or h from a first part of the bitstream. During step E81, the blocks e, f, g and/or h reconstructed at step E80 from which the macroblock $MB_{EL}^{rec}$ are to be reconstructed, are up-sampled, e.g. by bilinear interpolation. During step E82, a prediction macroblock $MB_{pred}$ is constructed from the equations defined above for the coding method (first and second embodiments) according to the mode cod_mode decoded during step E83. According to a variant, shown in figure 8, the prediction macroblock $MB_{pred}$ is constructed during a step E82' from the equations defined above for the coding method (third embodiment) according to the coding mode cod_mode and possibly the prediction modes blc_mode(s) decoded during a step E83'. It is not necessary to reconstruct and up-sample the blocks of the base layer that are not used to construct the prediction macroblock $MB_{pred}$. The prediction macroblock $MB_{pred}$ is constructed in the same way by the coding method during step E73 or E73' as by the decoding method during step E82 or E82'. During step E83 or E83', a macroblock of residues $MB_{EL}^{res\_rec}$ is also reconstructed from a second part of the bitstream. During step E84 the prediction macroblock $MB_{pred}$ is added pixel-by-pixel to the reconstructed macroblock of residues $MB_{EL}^{res\_rec}$. Step E84 generates the reconstructed macroblock $MB_{EL}^{rec}$.

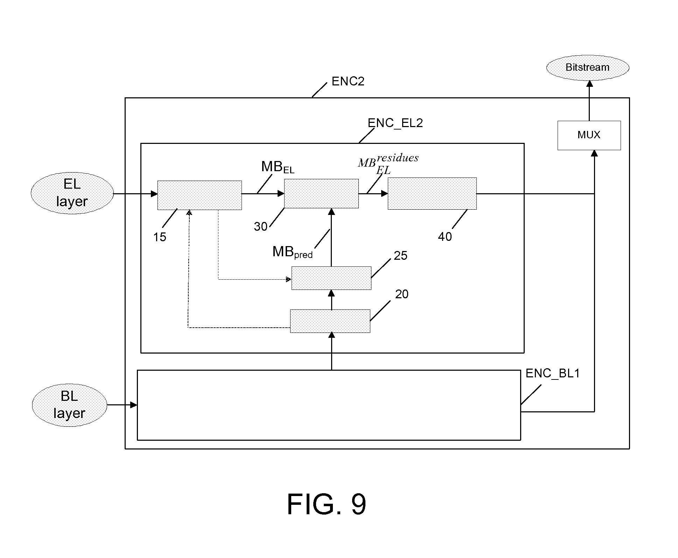

In reference to figure 9, the invention relates to a device ENC2 for coding a sequence of images presented in the form of a base layer BL and at least one enhancement layer EL. The modules of the coding device ENC2 identical to those of the coding device ENC1 are identified in figure 9 using the same references and are not further described. The coding device ENC2 includes the coding module ENC_BL1, a new coding module ENC_EL2 adapted to code the enhancement layer and the multiplex module MUX.

The coding module ENC_EL2 is adapted to code macroblocks of the EL layer according to standard coding modes (i.e. inter mode or intra mode), i.e. by predicting, either spatially or temporally, the said macroblocks from other macroblocks of the EL layer. In addition, in order to reduce the redundancy between the images of the base layer and the images of the enhancement layer, the coding module ENC_EL2 is also adapted to code macroblocks of the EL layer from image data blocks of the BL layer according to a coding mode called inter-layer, i.e. by predicting the said image data macroblocks of the EL layer from image data blocks of the BL layer.

Figure 9 only shows the ENC_BL1 and ENC_EL1 modules required to predict and code an image data macroblock $MB_{EL}$ of the EL layer of intra type from an image data block of the base layer, i.e. according to an inter-layer prediction mode, and to code the said macroblock $MB_{EL}$. Other modules not shown in this figure (e.g. motion estimation module, spatial prediction modules, temporal prediction module, etc.) well known to those skilled in the art of video coders enable macroblocks of the EL layer to be coded according to standard inter modes (e.g. bidirectional mode) or according to a standard intra mode (such as those defined in AVC) from neighbouring macroblocks A, B, C and/or D. In reference to figure 9, the module ENC_EL2 includes in particular the coding module 40 and the up-sampling module 20. It also includes a decision module 15 adapted to select the coding mode cod_mode of the macroblock $MB_{EL}$ according to a predefined criterion of rate-distortion type, for example, and possibly the prediction modes blc_mode of each of the blocks forming the said macroblock among a set of modes, in particular among those defined in the embodiments described above for the coding method. Finally, it includes a module 25 adapted to generate a prediction macroblock $MB_{pred}$ from the blocks e, f, g, and/or h up-sampled by the module 20 according to the coding mode and possibly the modes blc_mode(s) determined by the module 15. The module ENC_EL2 also includes the subtraction module 30 which subtracts the prediction macroblock $MB_{pred}$ pixel-by-pixel from the macroblock $MB_{EL}$, the said module generating a macroblock of residues $MB_{EL}^{residues}$ which is coded by the coding module 40.

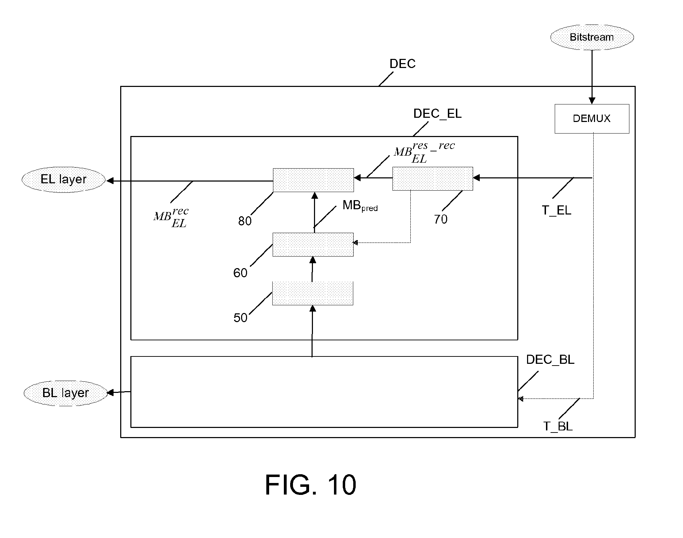

In reference to figure 10, the invention also relates to a device DEC for decoding a bitstream representing a sequence of images, the latter presented in the form of a base layer and at least one enhancement layer. The bitstream received at the input of the decoding device DEC is demultiplexed by a demultiplexing module DEMUX in order to generate a bitstream T_BL relative to a base layer and at least one bitstream T_EL relative to an enhancement layer. According to one variant, the demultiplexing module DEMUX is external to the decoding device DEC. In addition, the decoding device DEC includes a first decoding module DEC_BL which can reconstruct the base layer at least partially from the bitstream T_BL. Advantageously, according to the invention it is not necessary for the images of the base layer to be completely reconstructed in order to reconstruct the images of the enhancement layer. Indeed, the first decoding module DEC_BL must reconstruct at least the image data of the base layer that are required to reconstruct the images of the enhancement layer. The device DEC also includes a second decoding module DEC_EL that can reconstruct the enhancement layer from the bitstream T_EL and possibly image data of the base layer previously reconstructed by the first decoding module DEC_BL. The second decoding module DEC_EL includes a module 70 to reconstruct a macroblock of residues $MB_{EL}^{res-rec}$ from a part of the bitstream T_EL and to decode a mode cod_mode associated with the said reconstructed macroblock of residues $MB_{EL}^{res-rec}$ and possibly modes blc_mode(s) associated with each block of the macroblock. It also includes a module 50 to up-sample blocks of the base layer reconstructed by the first decoding module DEC_BL. The module 50 is an example of a bilinear interpolation filter. It also comprises a module 60 to reconstruct a prediction macroblock $MB_{pred}$ according to the mode cod_mode and possibly the modes blc_mode(s) from blocks of the base layer up-sampled by the module 50. In addition, it comprises a module 80 to add pixel-by-pixel the prediction macroblock $MB_{pred}$ generated by the module 60 and the macroblock of residues $MB_{EL}^{res-rec}$ reconstructed by the module 70. The module 80 reconstructs a macroblock of the enhancement layer noted as $MB_{EL}^{rec}$.

The invention also relates to a MPEG data bitstream comprising a coded field (e.g. hier_intra_bl_flag) on 1 bit for example, indicating that the macroblock $MB_{EL}$ of the EL layer is coded according to an inter-layer intra mode from at least one block of the base layer neighbouring the corresponding block $B_{BL}$.

Any video coding standard defines a syntax with which all bitstreams must comply in order to be compatible with this standard. The syntax defines in particular how different information is coded (for example, data relative to the images included in the sequence, motion vectors, etc.). According to SVC, the base layer is coded in accordance with the MPEG-4 AVC standard. The new MPEG-4 AVC syntax proposed is presented below in a table as a pseudocode with the same rules as in the JVT-T005 document, or more generally in the part relative to scalability in the ISO/IEC 14496-10 document. In particular, the operator '==' indicates "equal to". The operator '!' is the logical operator "NOT". In this table, the information added is shown in italics.

| A macroblock_layer_in_scalable_extension( ) { | C | Descripto r |
|---|---|---|
| if( in_crop_window( CurrMbAddr ) ) { | | |
| if(adaptive_prediction_flag ) | | |
| base_mode_flag | 2 | u(1)    \| ae(v) |
| } | | |
| if( ! base_mode_flag ) { | | |
| ***hier_intra_bl_flag*** | **2** | **u(1)    \| ae(v)** |
| mb_type | 2 | ue(v)    \| ae(v) |
| } | | |
| if( mb_type  = =  I_PCM ) { | | |
| while( !byte_aligned( ) ) | | |
| pcm_alignment_zero_bit | 2 | f(1) |
| for( i = 0; i < 256; i++ ) | | |
| pcm_sample_luma[ i ] | 2 | u(v) |
| for( i = 0; i < 2 * MbWidthC * MbHeightC; i++ ) | | |
| pcm_sample_chroma[ i ] | 2 | u(v) |
| } else { | | |
| NoSubMbPartSizeLessThan8x8Flag = 1 | | |
| if( mb_type != I_NxN && MbPartPredMode( mb_type, 0 ) != Intra_16x16 && NumMbPart( mb_type ) = = 4 ) { | | |
| sub_mb_pred_in_scalable_extension( mb_type ) | 2 | |
| for( mbPartIdx = 0; mbPartIdx < 4; mbPartIdx++ ) | | |
| if( sub_mb_type[ mbPartIdx ] != B_Direct_8x8 ) { | | |
| if( NumSubMbPart( sub_mb_type [ mbPartIdx ] ) > 1 ) | | |
| NoSubMbPartSizeLessThan8x8Flag = 0 | | |
| } else if( !direct_8x8_inference_flag ) | | |

| | | |
|---|---|---|
| NoSubMbPartSizeLessThan8x8Flag = 0 | | |
| } else { | | |
| if( transform_8x8_mode_flag && mb_type = = I_NxN ) | | |
| transform_size_8x8_flag | 2 | u(1) \| ae(v) |
| mb_pred_in_scalable_extension( mb_type ) | 2 | |
| } | | |
| if( MbPartPredMode( mb_type, 0 ) != Intra_16x16 ) { | | |
| coded_block_pattern | 2 | me(v) \| ae(v) |
| if( CodedBlockPatternLuma > 0 && <br> transform_8x8_mode_flag && <br> mb_type != I_NxN && <br> NoSubMbPartSizeLessThan8x8Flag && <br> !( MbPartPredMode( mb_type, 0 ) = = B_Direct_16x16 && <br> !direct_8x8_inference_flag ) ) | | |
| transform_size_8x8_flag | 2 | u(1) \| ae(v) |
| } | | |
| if( CodedBlockPatternLuma > 0 \| \| CodedBlockPatternChroma > 0 \| \| MbPartPredMode( mb_type, 0 ) = = Intra_16x16 ) {-{}- | | |
| mb_qp_delta | 2 | se(v) \| ae(v) |
| residual_in_scalable_extension( ) | 3 \| 4 | |
| } | | |
| } | | |
| } | | |

*hier_intra_bl_flag* is a field coded on 1 bits, for example, which indicates whether the macroblock $MB_{EL}$ of the EL layer is coded according to an inter-layer type intra mode from at least one block of the base layer neighbouring the corresponding block $B_{BL}$.

Of course, the invention is not limited to the embodiment examples mentioned above. In particular, the invention described for the SVC standard may be applied to another defined coding standard to code a sequence of images in scalable format. Moreover, other equations than those defined below may be used to generate a macroblock $MB_{pred}$ or a prediction block $pred4x4_L$. The equations provided are for reference only.

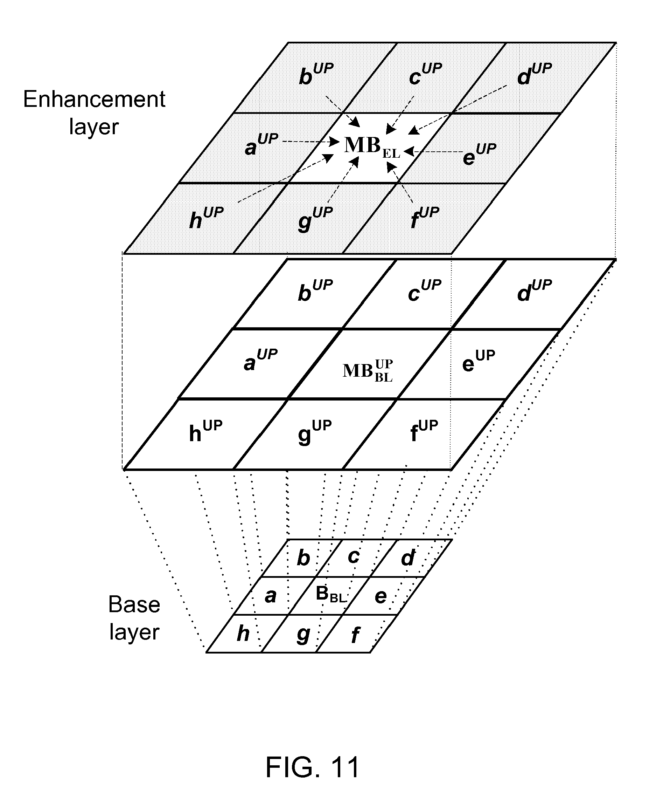

In addition, the coding and decoding methods described with the blocks e, f, g and h of the base layer can be used with blocks a,b,c and d surrounding the block $B_{BL}$ corresponding to the said macroblock $MB_{EL}$. According to the embodiment shown in figure 11, a prediction macroblock $MB_{pred}$ is constructed from one or several macroblocks $a^{UP}$, $b^{UP}$, $c^{UP}$ and $d^{UP}$ which are the up-sampled versions of blocks a, b, c and d respectively. The macroblock $MB_{pred}$ may be constructed for example from the equations defined in the MPEG-4 AVC standard for the spatial prediction (i.e. intra) of a macroblock. In these equations, the macroblock A is replaced by the macroblock $a^{UP}$, the macroblock B by the macroblock $b^{UP}$, the macroblock C by the macroblock $C^{UP}$ and the macroblock D by the macroblock $d^{UP}$. Likewise, the invention may be extended to other neighbouring blocks of the corresponding block, that are not necessarily adjacent.

Of course, the previous embodiments can be combined. The macroblock $MB_{pred}$ is then constructed either from blocks A, B, C and/or D, from blocks b, c, d, e, f, g and/or h, or from the block $B_{BL}$, the choice having been made at a decision step of the mode for coding and hence predicting the macroblock $MB_{EL}$ according to a rate-distortion criterion, for example.

**Claims**

1. Method for coding an image data macroblock ($MB_{EL}$) of a sequence of images presented in the form of a base layer and at least one enhancement layer, the said image data macroblock ($MB_{EL}$) to which corresponds an image data block ($B_{BL}$) in the said base layer, called corresponding block, belonging to the said enhancement layer, the said method including the following steps:

   - generate (E72, E73, E73'), for the said image data macroblock ($MB_{EL}$), a prediction macroblock ($MBp_{red}$) of image data from one block or several blocks of image data of the said base layer previously coded (E70) and reconstructed (E71 ),

   - generate (E74) a macroblock of residues $\left( MB_{EL}^{residues} \right)$ from the prediction macroblock ($MB_{pred}$) and from the image data macroblock ($MB_{EL}$) of the enhancement layer, and

   - code (E75) the said macroblock of residues $\left( MB_{EL}^{residues} \right)$,

   the said coding method being **characterized in that** the said prediction macroblock ($MBp_{red}$) is generated only from blocks of image data of the base layer different from the corresponding block ($B_{BL}$).

2. Method according to claim 1, in which the said blocks of image data of the base layer are adjacent to the said corresponding block ($B_{BL}$).

3. Method according to claim 1, in which the said blocks of image data of the base layer are located in a non-causal neighbouring area of the corresponding block ($B_{BL}$).

4. Method according to claim 3, in which the said prediction macroblock ($MB_{pred}$) is generated from one block or several blocks of image data of the base layer belonging to the set comprising :

   - the block lying below and to the left of the corresponding block ($B_{BL}$);
   - the block lying below and to the right of the corresponding block ($B_{BL}$);
   - the block lying immediately to the right of the corresponding block ($B_{BL}$); and
   - the block lying immediately below the corresponding block ($B_{BL}$).

5. Coding device (ENC2) of a sequence of images presented in the form of a base layer and at least one enhancement layer, the said enhancement layer comprising at least one image data macroblock ($MB_{EL}$) to which corresponds a block ($B_{BL}$) in the said base layer, called corresponding block, the said device (ENC2) comprising a first coding module (ENC_BL1) to code image data blocks of the said base layer and a second coding module (ENC_EL2) to code image data macroblocks of the said enhancement layer, the said second coding module (ENC_EL2) comprising:

- first means (20, 25) to generate, for the said macroblock (MB$_{EL}$) of image data of the said enhancement layer, a prediction macroblock (MB$_{pred}$) from one block or several blocks of image data of the said base layer previously coded and reconstructed by the said first coding module (ENC_BL1),

- second means (30) to generate a macroblock of residues $\left( MB_{EL}^{residues} \right)$ from the prediction macroblock (MBp$_{red}$) and from the image data macroblock of the enhancement layer (MB$_{EL}$), and

- third means (40) to code the said macroblock of residues $\left( MB_{EL}^{residues} \right)$,

the said coding device being **characterized in that** the said first means (20, 25) are adapted to generate the said prediction macroblock (MB$_{pred}$) only from blocks of image data of the base layer different from the corresponding block (B$_{BL}$).

6. Method for decoding a part of a bitstream representative of a sequence of images presented in the form of a base layer and at least one enhancement layer with a view to the reconstruction of a macroblock $\left( MB_{EL}^{rec} \right)$ of image data of the said enhancement layer to which corresponds a image data block in the base layer, called corresponding block, the said decoding method comprising the following steps:

- generate (E81, E82, E82'), for the said image data macroblock $\left( MB_{EL}^{rec} \right)$, a prediction macroblock (MB$_{pred}$) from one block or several blocks of image data of the said base layer previously reconstructed (E80) from a first part of the bitstream representative of the said image data blocks,

- reconstruct (E83, E83') a macroblock of residues $\left( MB_{EL}^{res\_rec} \right)$ from a second part of the bitstream representative of the said macroblock of residues, and

- reconstruct (E84) the said macroblock $\left( MB_{EL}^{rec} \right)$ of the said enhancement layer from the prediction macroblock (MB$_{pred}$) and from the reconstructed macroblock of residues $\left( MB_{EL}^{res\_rec} \right)$,

the said decoding method being **characterized in that** the said prediction macroblock (MB$_{pred}$) is generated only from blocks of image data of the base layer different from the corresponding block (B$_{BL}$).

7. Decoding device (DEC) of a bitstream representative of a sequence of images presented in the form of a base layer and at least one enhancement layer, the said device (DEC) comprising a first decoding module (DEC_BL) adapted for reconstructing image data blocks from the said base layer and a second decoding module (DEC_EL) adapted for reconstructing image data macroblocks of the said enhancement layer, the said second decoding module (DEC_EL) comprising:

- first means (50, 60) to generate, for an image data macroblock $\left( MB_{EL}^{rec} \right)$ of the said enhancement layer to which corresponds an image data block in the said base layer, called corresponding block, a prediction macroblock (MB$_{pred}$) from one block or from several blocks of image data previously reconstructed by the said first decoding module (DEC_BL) from a first part of the bitstream representative of the said image data blocks,

- second means (70) to reconstruct a macroblock of residues $\left( MB_{EL}^{res\_rec} \right)$ from a second part of the bitstream representative of the said macroblock of residues, and

- third means (80) to reconstruct the said image data macroblock $\left( MB_{EL}^{rec} \right)$ from the prediction macroblock (MB$_{pred}$) and from the reconstructed macroblock of residues $\left( MB_{EL}^{res\_rec} \right)$,

the said decoding device **characterized in that** the said first means (20, 25) are adapted to generate the said prediction macroblock (MB$_{pred}$) only from blocks of image data of the base layer different from the corresponding block (B$_{BL}$).

8. Coded data stream representative of a sequence of images presented in the form of a base layer and at least one enhancement layer, the said stream comprising a binary data associated with an image data macroblock ($MB_{EL}$) of the said enhancement layer to which corresponds an image data block ($B_{BL}$) of the said base layer, **characterized in that** the said binary data indicates that the said macroblock ($MB_{EL}$) is coded only from blocks of image data of the base layer different from the corresponding block ($B_{BL}$).

ENC1

Bitstream

ENC_EL1

MUX

$MB_{EL}^{residues}$

EL layer

10                MB$_{EL}$        30        $MB_{BL}^{UP}$        40

20

$B_{BL}^{rec}$

ENC_BL1

BL layer

# FIG. 1 – PRIOR ART

**FIG. 2 – PRIOR ART**

MB$_{EL}$    e,f, g, h

E70

E71

E72

e$^{UP}$,f$^{UP}$, g$^{UP}$, h$^{UP}$    cod_mode

E73

$MB_{pred}$

E74

$MB_{EL}^{residues}$

E75

Bitstream

FIG. 3

Enhancement
layer

B    C    D

A    $\mathbf{MB_{EI}}$    $e^{UP}$

$h^{UP}$    $g^{UP}$    $f^{UP}$

$\mathbf{MB_{BL}^{UP}}$    $e^{UP}$

$h^{UP}$    $g^{UP}$    $f^{UP}$

Base
layer

b    c    d

a    $B_{BL}$    e

h    g    f

FIG. 4

FIG. 5

MB$_{EL}$

e,f, g, h

E70

E71

E72

e$^{UP}$,f$^{UP}$, g$^{UP}$, h$^{UP}$

cod_mode,
blc_mode(s)

E73'

$MB_{pred}$

E74

$MB_{EL}^{residues}$

E75

Bitstream

FIG. 6

T_EL

T_BL

E83

$$MB_{EL}^{res\_rec}$$

E80

E81

$$e^{UP}, f^{UP}, g^{UP}, h^{UP}$$

Cod_mode

E82

$$MB_{pred}$$

E84

$$MB_{EL}^{rec}$$

FIG. 7

$$MB_{EL}^{res\_rec}$$

$$e^{UP}, f^{UP}, g^{UP}, h^{UP}$$

E81

E83'

E80

cod_mode,
blc_mode(s)

E82'

MB_pred

E84

$$MB_{EL}^{rec}$$

FIG. 8

ENC2

ENC_EL2

Bitstream

MUX

ENC_BL1

EL layer

BL layer

$MB_{EL}$

$MB_{EL}^{residues}$

$MB_{pred}$

15

30

25

20

40

FIG. 9

FIG. 10

FIG. 11

FIG. 12